# EUROPEAN PATENT APPLICATION

(11) **EP 1 712 304 A1**
(43) Date of publication of application: **18.10.2006**
(21) Application number: 05727842.6
(22) Date of filing: 29.03.2005
(51) Int. Cl.: B09B 5/00, G11B 33/00

(54) **RECORDING MEDIUM DESTRUCTING DEVICE, RECORDING MEDIUM DESTRUCTING SYSTEM, ELECTRONIC APPARATUS MANAGING DEVICE, AND COMPUTER PROGRAM**

(30) Priority: 31.03.2004 JP 2004103186; 20.05.2004 JP 2004150238; 16.07.2004 JP 2004210371; 19.11.2004 JP 2004335557; 09.02.2005 JP 2005032488; 11.03.2005 JP 2005068523
(71) Applicant: Orient Instrument Computer Co., Ltd, Osaka-shi, Osaka 536-0014 (JP)
(72) Inventor: ITO, Tomoaki, ORIENT INSTRUMENT COMPUTER CO., LTD., Osaka-shi, Osaka 5360014 (JP)
(74) Representative: Paul, Dieter-Alfred
(86) International application number: PCT/JP2005/005818
(87) International publication number: WO 2005/095010

(57) **Abstract**

A recording medium destruction apparatus capable of confirming that a recording medium no longer required is destroyed to enter an unreadable state is provided. In a recording medium destruction apparatus 91 that drives a pin 1 for destroying a recording medium 15 so that information recorded on the recording medium 15 is irreproducible, there is provided monitoring means 50 for monitoring situations where the recording medium 15 is destroyed. There are provided code number assignment means for assigning a code number to the recording medium 15 to be destroyed, and recording means for recording, when the recording medium 15 has been destroyed, the code number assigned to the destroyed recording medium and the date on which the recording medium has been destroyed.

## Description

### TECHNICAL FIELD

The present invention relates to a recording medium destruction apparatus for destroying information recorded on a recording medium, for example, a magnetic recording medium such as a hard disk, an optical recording medium, or recording paper so as to be irreproducible (unreadable). The present invention may be also applied to a recording medium destruction apparatus having a configuration in which a recording medium is destroyed with the recording medium contained in electronic equipment such as a cellular phone.

Furthermore, the present invention relates to a supervising apparatus for supervising electronic equipment such as a personal computer.

### BACKGROUND ART

With the progress of data storage technologies, various types of data recording media have been developed.

For example, data in personal computers (PCs) are recorded on magnetic recording media such as flexible disks (FDs) and magneto-optical disks (MOs) or optical recording media such as compact discs (CDs) and digital versatile discs (DVDs). Data in general purpose computers are recorded on magnetic recording media such as magnetic tapes (MTs). Further, the data in computers are printed on data recording paper, and handwritten characters and graphics are recorded on recording paper.

Particularly in recent years, with the progress of computer-associated technologies, large-capacity recording media such as hard disks and media cards have been developed. The large-capacity recording media have been commonly used in not only special uses by research institutes in large corporations, universities, etc. but also in general homes. The hard disks and the media cards, for example, have been increasing in capacity. Within just a few years, more opportunities to newly replace the recording media with larger-capacity ones so that the existing recording media no longer required are disposed of have been provided.

When the recording media no longer required are discarded, close attention is needed such that secret information does not leak. That is, recorded information must be erased, or must be brought into an unreadable state.

In order to erase recorded data on magnetic recording media, rewritable optical recording media, and so on, methods of overwriting dummy data to erase its original data may, in some cases, have been employed. However, a long time is required to make the original data completely unreadable. Further, the methods of overwriting dummy data cannot be applied to unrewritable optical recording media and others.

Therefore, methods of not erasing information but physically destroying recording media themselves to bring the information into unreadable states are more actual. Technologies employing such methods are disclosed in the following Patent Document 1 and Patent Document 2.

Patent Document 1: JP 2004-071057 A

Patent Document 2: JP 2004-039059 A

### DISCLOSURE OF THE INVENTION

### PROBLEMS TO BE SOLVED BY THE INVENTION

Even if the need for a recording medium itself is eliminated, recorded information has secrecy in many cases. In the conventional techniques in the Patent Documents 1 and 2, for example, it cannot be confirmed that the recording medium has been subjected to destruction so as to enter a reliably unreadable state when it is disposed of.

Therefore, an object of the present invention is to provide a recording medium destruction apparatus capable of confirming that a recording medium no longer required has been subjected to destruction so as to enter an unreadable state.

Conventionally, operations of erasing recorded information and destroying a recording medium itself has been ordinarily performed by an owner himself or herself of the recording medium. However, the inventor of the present invention has considered a business model that contracts the operations for payment. There is a problem with reliability as an item of concern in implementing the business model.

That is, if the recorded information leaks out, an owner of the information suffers extensive damage. Therefore, the owner of the information (a client) spares no expenses for the operation of destroying the recording medium. If the recording medium is discarded after being completely destroyed, therefore, the client will pay reasonable expenses to a worker.

However, the recording medium is finally discarded. Even if the recording medium is discarded as it is without being destroyed, the client has no way of knowing the fact. If the recording medium is discarded as it is without being destroyed, the client is exposed to a risk that information would leak while bearing high expenses. Even if the recording medium is not sufficiently destroyed so that information leaks from the recording medium, it is difficult for the client to prove this.

On the other hand, when information leaks through another channel, the client suspects the worker. However, the worker cannot prove his or her innocence. Even if the worker is innocent, therefore, the worker runs the risk of losing his or her credit or receiving a claim for damages when information leaks through another channel.

Therefore, an object of the present invention is to provide a recording medium destruction apparatus that makes confirmation that a recording medium has been destroyed easy, reduces risks to both a client and a worker, and makes the above-mentioned business model feasible.

### SUMMARY OF THE INVENTION

An aspect of the present invention for solving the above-mentioned problem is a recording medium destruction apparatus for destroying a recording medium so that information recorded on the recording medium is irreproducible, including image information recording means, the image information recording means recording at least one of the following information:
(1) Information related to a still image or a moving image at the time of destroying the recording medium
(2) Information related to a still image or a moving image of the recording medium that has been destroyed
(3) Information related to a still image or a moving image obtained by picking up an image of a person who has operated the recording medium destruction apparatus
(4) Information related to a still image or a moving image obtained by picking up an image of the surroundings of the place where the recording medium destruction apparatus itself is installed
(5) Information related to a still image or a moving image for specifying the destroyed recording medium
(6) Information related to a still image or a moving image for specifying the recording medium destruction apparatus itself.

The image information recording means may record an image in an analog manner or using a digital signal. The recording may be temporarily performed. The image information recording means is not limited to one for electronically recording image information. For example, it may be one for recording the image information in a state where it is printed on paper or the like.

According to the recording medium destruction apparatus in the present invention, it is possible to confirm that the recording medium has been destroyed.

In the present invention, the image information recording means may record the still image or may record the moving image. As a configuration for recording the still image, a configuration using a digital camera, for example, can be employed. On the other hand, as a configuration for recording the moving image, a configuration using a video camera or a scanner head can be employed.

In order to store image data representing the still image or the moving image, a large-capacity data storage such as a hard disk or a memory can be employed.

It is preferable that the recording medium destruction apparatus according to the present invention includes the image information recording means having image pickup means for picking up at least one of the following images:
(1) A still image or a moving image at the time of destroying the recording medium
(2) A still image or a moving image of the recording medium that has been destroyed
(3) A still image or a moving image obtained by picking up an image of a person who has operated the recording medium destruction apparatus
(4) A still image or a moving image obtained by picking up an image of the surroundings of the place where the recording medium destruction apparatus itself is installed
(5) A still image or a moving image for specifying the destroyed recording medium
(6) A still image or a moving image for specifying the recording medium destruction apparatus itself.

According to such a configuration, it is possible to confirm that the recording medium has been destroyed.

It is preferable that the recording medium destruction apparatus according to the present invention includes bibliographic information recording means for recording at least one of the following bibliographic information:
(1) Information for specifying the place where the recording medium destruction apparatus is installed
(2) Information for specifying the time when the recording medium was destroyed
(3) Information for specifying a person who has operated the recording medium destruction apparatus
(4) Information for specifying the destroyed recording medium
(5) Information for specifying the recording medium destruction apparatus itself
(6) Information for specifying the reason for destroying the recording medium
(7) Information for specifying the original owner of the destroyed recording medium
(8) Information for specifying a person who has requested to destroy the recording medium.

Since such a configuration has the bibliographic information recording means, necessary information other than an image can be also recorded.

It is more preferable that the bibliographic information recording means has printing means.

It is preferable that the recording medium destruction apparatus is adapted to apply a mechanical (physical) force to the recording medium so as to destroy the recording medium. The reason for this is that the recording medium can be destroyed by a simple configuration, and destruction is easy to record as an image.

Examples of the "physical force" include tension, compression, and striking. Further, such a case that an object such as a pin penetrates the recording medium is also included.

The recording medium destruction apparatus may be adapted to apply at least one of an electromagnetic wave, a magnetic field, and heat to the recording medium so as to destroy the recording means. Alternatively, the recording medium destruction apparatus may be one using a combination of such a destruction apparatus and a destruction apparatus using a physical force.

It is preferable that the destruction apparatus according to the present invention includes code number assignment means for assigning a code number to the recording medium to be destroyed, and recording means for recording, when the recording medium is destroyed, the code number assigned to the destroyed recording medium and the date on which the recording medium has been destroyed.

According to such a configuration, even when an owner of the recording medium to be discarded requests a third person to destroy the recording medium, and destruction is performed in the place where the owner (a client) does not exist, the client can confirm that the recording medium has been destroyed at a later time or on a later date.

The apparatus according to the present invention may be a recording medium destruction apparatus that is adapted to cut and destroy the recording medium with a rotary cutting edge, and further include image information recording medium for recording the recording medium as the still image or the moving image from the time of insertion of the recording medium to the time of falling of the recording medium into the rotary cutting edge arranged opposite thereto so as to be cut therewith.

Although the recording medium referred to in the present invention includes a magnetic recording medium, an optical recording medium, and recording paper, as described above, the recording paper is easy to destroy so as to be unreadable according to such a configuration.

Generally, a title representing the contents of recorded data is written down on a surface of the recording medium. The recording paper has characters and graphics recorded on its paper surface. Consequently, the recording medium can be specified by referring to an image of the recording medium itself.

According to such a destruction apparatus, the recording medium itself from the time when it is inserted thereinto to the time when it falls into the rotary cutting edge and is cut therewith is recorded as the still image or the moving image by the image recording means. That is, according to such a configuration, the recording medium immediately before the destruction with the rotary cutting edge is recorded by the image recording means. Consequently, it can be proved that the specific recording medium has been subjected to destruction by referring to the recorded image data.

Consequently, a worker who has subjected the recording medium to destruction presents the image data for proving that the recording medium has been subjected to destruction to a client who has requested to perform the destruction so that the client can be made to confirm that the recording medium has been reliably subjected to the destruction.

As a cutting form with the rotary cutting edge, it is possible to take a form such as so-called straight-cut for cutting the recording medium in a long narrow shape in the longitudinal direction by a pair of rotary cutting edges, so-called crosscut for cutting the recording medium into small pieces in the longitudinal and transverse directions by a pair of rotary cutting edges, or spiral cut for cutting the recording medium into very small pieces in the longitudinal and transverse directions by a pair of rotary cutting edges that differ in shape.

The recording medium destruction apparatus may record as the still image or the moving image the cut pieces discharged upon cutting the recording medium with the rotary cutting edges.

According to such a configuration, an image of situations where the cut pieces of the cut recording medium are discharged is recorded in addition to an image of the recording medium immediately before the cutting. Therefore, a client can be given a sense of security because he or she can be made to more easily confirm that the specific recording medium has been reliably subjected to destruction by referring to image data.

It is preferable that the recording medium destruction apparatus is so configured that the recording medium belonging to any one of a plurality of thickness categories set depending on the thickness of the recording medium or the recording media belonging to two or more of the thickness categories can be cut.

If the recording medium destruction apparatus employs the configuration in which the recording medium belonging to any one of the thickness categories can be cut, the recording medium destruction apparatus can sequentially insert, by previously classifying the recording media to be discarded for each thickness, the recording media having the corresponding thicknesses to efficiently perform destruction.

On the other hand, if the recording medium destruction apparatus employs the configuration in which the recording media belonging to two or more of the thickness categories can be cut, the one recording medium destruction apparatus can subject the recording media that differ in thickness to destruction, so that the number of destruction apparatuses to be installed can be reduced.

It is possible to employ, as an example of the configuration in which the recording media belonging to two or more of the thickness categories can be cut, a configuration in which a plurality of regions (cut regions) are provided along a rotary shaft of rotary cutting edges, which differ in shape or size, capable of cutting the recording media corresponding to the thickness categories can be arranged for each of the regions.

According to this configuration, the recording media that differ in thickness can be cut by selecting the cut region to be inserted into the rotary cutting edge depending on the recording medium to be inserted. Since the rotary cutting edges that differ in shape are driven to rotate by means of a common rotary shaft, the configuration of the apparatus can be simplified, which allows cost saving to be achieved. That is, the most suitable cut region is selected depending on the recording medium to be destroyed, which allows working efficiency to be improved.

If an insertion port through which the recording medium is inserted into the recording medium destruction apparatus is composed of a plurality of insertion regions, and the insertion regions respectively correspond to the cut regions, the operation is easy, which is advantageous.

It is also possible to employ a configuration in which rotary cutting edges that differ in shape or size are not formed on a common rotary shaft but formed on different rotary shafts to drive each of the rotary shafts to rotate using one motor, and a configuration in which the rotary shafts are respectively driven to rotate using separate motors.

An aspect of the present invention is a recording medium destruction apparatus for driving a pin so as to destroy a recording medium so that information recorded on the recording medium is irreproducible, the recording medium destruction apparatus including monitoring means for monitoring situations where the recording medium is destroyed.

According to such an aspect, it is possible to confirm that the recording medium no longer required has been subjected to destruction to enter an unreadable state, so that leakage of secret information can be reliably prevented.

The recording medium destruction apparatus according to the present invention may include an electric coil for generating a magnetic field having a predetermined intensity, a pin for physically destroying the recording medium, and a receptacle for accommodating the recording medium, the coil being wound around an outer surface of the receptacle so that the magnetic field is induced within the receptacle, the pin being mounted on the outside of the receptacle so as to be movable nearer to and apart from the receptacle and to be adapted to pierce and destroy the recording medium accommodated within the receptacle through an opening formed toward the receptacle, and may further include image pickup means for picking up an image of the process of operation on the recording medium, including at least inherent information for specifying the recording medium.

According to such a configuration, the recording medium can be more reliably destroyed by using a combination of data erasure by the magnetic field and destruction of the recording medium by the pin.

A recording medium destruction system may be built, including any one of the recording medium destruction apparatuses according to the present invention, and a control device connected to the recording medium destruction apparatus, for transmitting image data recorded on the image information recording medium toward the control device depending on the operation of the control device to perform at least either one of display and printing.

According to such a configuration, every time a series of destruction operations is completed, the recording medium that has been subjected to the destruction can be easily managed by transmitting the image data recorded on the image recording means to the control device and displaying and/or printing the transmitted image data. The recording medium destruction apparatus need not contain the function of displaying and printing image data, so that the configuration of the apparatus can be simplified.

A recording medium destruction system may be built, including a plurality of any of the recording medium destruction apparatuses according to the present invention, and a control device connected to the recording medium destruction apparatuses, for sequentially transmitting the image data recorded on the image information recording means toward the control device, to allow the image data to be collectively managed therein.

According to such a configuration, the plurality of recording medium destruction apparatuses are connected to the one control device so that the respective image data transmitted from the recording medium destruction apparatuses can be collectively managed by the control device. Thus, it is possible to easily carry out management services of the recording medium that has been subjected to the destruction.

Since the image data recorded on the image recording means can be sequentially transmitted toward the control device, the data storage capacity required for the image recording means can be reduced.

A further aspect of the present invention is an electronic equipment supervising apparatus adapted to record information for specifying an electronic equipment and an outline of data possessed by the electronic equipment, and to record discard of the equipment and destruction of the data by image information.

Such an electronic equipment supervising apparatus can record the information for specifying the electronic equipment and the outline of the data possessed by the electronic equipment, which allows management as to what data is recorded and on which electronic equipment the data is recorded. Here, data is a concept including a constructed program or a program, information, etc. introduced from the exterior in addition to client information, CAD data, etc. stored by a user of electronic equipment, for example.

Examples of the "outline of data" include titles such as "Address of Client" and "Part Drawing of Bumper for A Corporation", and a simple abstract.

Information for specifying electronic equipment includes the assent number or the like of the equipment and the nickname of the equipment. The "electronic equipment" is a concept including a storage device itself such as a hard disk drive or an optical disk in addition to mechanical equipment containing a recording device such as a personal computer, an electronic copying machine, or a facsimile machine.

The electronic equipment supervising apparatus according to the present invention can record the discard of the equipment and the destruction of the data using image information, so that it is possible to not only supervise the equipment but also manage the data.

It is preferable that the electronic equipment is connected to the electronic equipment supervising apparatus.

According to such a configuration, the presence and the alteration of the information stored in the electronic equipment can be detected on the side of the electronic equipment supervising apparatus.

It is preferable that the electronic equipment supervising apparatus is adapted to record a copying history and/or an overwriting history of the data possessed by the electronic equipment.

According to such a configuration, it is possible to manage the presence or absence of a reproduction and the history of alternation.

It is preferable that the electronic equipment supervising apparatus according to the present invention is adapted to record destruction of copied data.

According to such an electronic equipment supervising apparatus, the present conditions of the copied data can be also managed.

It is preferable that the electronic equipment supervising apparatus according to the present invention is adapted to record respective videos before and after the destruction of the electronic equipment or the recording medium.

In such an electronic equipment supervising apparatus, the video of the electronic equipment and the video thereof after the destruction can be recorded, so that evidence suggesting that the equipment has been destroyed can be left. The "video" includes both a still image and a moving image.

In the present invention, it is preferable that there is provided a destruction apparatus for the electronic equipment or the recording medium, and the destruction apparatus is connected to the electronic equipment supervising apparatus.

According to such a configuration, the destruction apparatus is connected to the electronic equipment supervising apparatus, so that various types of information can be directly inputted to the electronic equipment supervising apparatus. The "destruction apparatus" includes an apparatus for applying magnetism or the like to electronic equipment to make data unreadable in addition to an apparatus for destroying, for example, perforating or cutting electronic equipment to enter a state where the appearance thereof is deformed.

It is preferable that the destruction apparatus is adapted to pick up an image of the electronic equipment or the recording medium at the time of or after the destruction.

According to such a configuration, the video to be evidence of the destruction can be directly inputted to the electronic equipment supervising apparatus.

It is preferable that the electronic equipment supervising apparatus or the destruction apparatus is connected to an information reading device so that information for specifying the electronic equipment is obtained by information read from the information reading device.

According to such a configuration, it is easy to specify the electronic equipment.

Examples of the information reading device include a bar code reader and an IC chip information reading device.

That is, in recent years, a bar code and an IC chip have been made use of for asset management or the like in many cases. Therefore, the bar code may be assigned to the electronic equipment, and the IC chip may be attached thereto. The electronic equipment shall be specified utilizing the bar code and the IC chip.

A computer program that is one aspect of the present invention is a computer program for recording information for specifying electronic equipment, outline of data possessed by the electronic equipment, discard of the equipment, and destruction of the data.

According to such a computer program, it is possible to confirm that the specific electronic equipment has been discarded, and the data possessed by the electronic equipment has been destroyed.

### ADVANTAGEOUS EFFECT OF THE INVENTION

The present invention has the effect of making it possible to confirm that the recording medium no longer required has been subjected to destruction to enter an unreadable state.

In the electronic equipment supervising apparatus according to the present invention, it is possible to not only supervise equipments but also manage data. Therefore, important information can be prevented from leaking out.

### BRIEF DESCRIPTION OF THE DRAWINGS

Fig. 1 is a front view of a recording medium destruction apparatus that embodies the present invention.
Fig. 2 is a diagram showing the overall configuration of a recording medium destruction apparatus according to a second embodiment of the present invention.
Fig. 3 is a partially broken perspective view showing the internal configuration of a main body device in the recording medium destruction apparatus shown in Fig. 2.
Fig. 4 is a front view showing an example of a certificate of destruction printed by the recording medium destruction apparatus shown in Fig. 2.
Fig. 5 is a sectional perspective view of a principal part in a state where a hard disk is pierced with a pin on a driver, showing a modified example of the driver.
Fig. 6 is a partially sectional perspective view of a driver in a recording medium destruction apparatus with an electrical force added thereto.
Fig. 7 is an exploded perspective view of a pin employed in a recording medium destruction apparatus according to still another embodiment of the present invention.
Fig. 8 is a cross-sectional view of the pin shown in Fig. 7.
Figs. 9A and 9B are perspective views showing a recording medium destruction apparatus according to a further embodiment of the present invention.
Fig. 10 is a cross-sectional view taken along a line A - A shown in Fig. 9A.
Fig. 11 is a cross-sectional view taken along a line B - B shown in Fig. 9A.
Fig. 12 is a diagram showing an example of the configuration of a destruction system using the recording medium destruction apparatus shown in Figs. 9A and 9B.
Figs. 13A and 13B are cross-sectional views showing a state immediately before destruction of a recording medium inserted into the recording medium destruction apparatus shown in Figs. 9A and 9B.
Figs. 14A and 14B are cross-sectional views showing a state where the recording medium inserted in Figs. 13A and 13B is destroyed.
Fig. 15 is a diagram for describing image data recorded by the recording medium destruction apparatus shown in Figs. 9A and 9B.
Fig. 16 is a diagram for describing a certificate of destruction issued by the destruction system shown in Fig. 12.
Fig. 17 is a cross-sectional view showing the internal configuration of a recording medium destruction apparatus according to a modified embodiment in correspondence with the sectional perspective view taken along the line B - B shown in Fig. 9A.
Fig. 18 is a cross-sectional view showing the internal configuration of a recording medium destruction apparatus according to a modified embodiment in correspondence with the sectional perspective view taken along the line B - B shown in Fig. 9A.
Fig. 19 is a diagram showing an example of the configuration of a destruction system according to a modified embodiment.
Fig. 20 is a conceptual view of an electronic equipment supervising apparatus according to a still further embodiment of the present invention and its peripheral equipment.
Fig. 21 is a perspective view of an electronic equipment destruction apparatus (a recording medium destruction apparatus) employed in the present embodiment.
Fig. 22 is a management sheet displayed on a display in the electronic equipment supervising apparatus shown in Fig. 20.
Fig. 23 is a fundamental circuit diagram of an electronic equipment destruction apparatus (a recording medium destruction apparatus) according to a still further embodiment of the present invention.
Fig. 24 is a perspective view showing the internal configuration of the electronic equipment destruction apparatus shown in Fig. 23.
Fig. 25 is a perspective view showing a modified example of the electronic equipment destruction apparatus.
Fig. 26 is a perspective view showing a modified example of a measure to destroy electronic equipment.
Fig. 27 is an explanatory view showing one process of the measure shown in Fig. 26.

### DESCRIPTION OF THE PREFERRED EMBODIMENTS

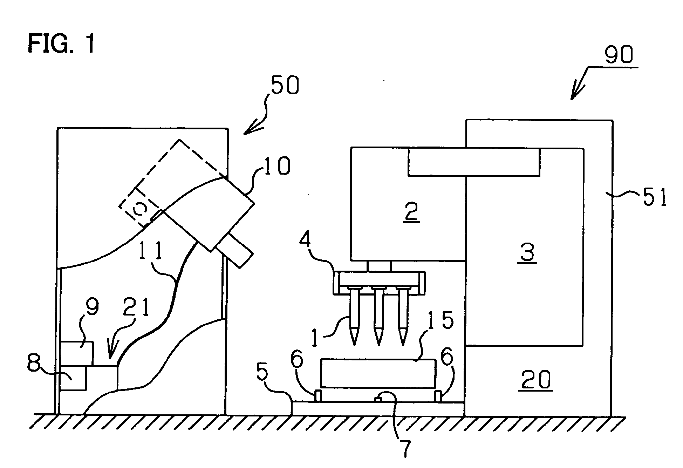

Fig. 1 is a front view of a recording medium destruction apparatus 90 that has embodied the present invention.

As shown in Fig. 1, the recording medium destruction apparatus 90 includes a main body device 51 and a monitoring device 50. That is, the main body device 51 includes a fixing stand 20 for fixing an electric motor 3, a hard disk fixing stand 5, and so on, and the monitoring device 50 includes a video camera 10 and others, as described later.

The motor 3 is fixed in the main body device 51, and the motor 3 is further provided with a speed reducer 2. The motor 3 supports a driver 4 having a plurality of downward pins 1 fastened to its lower surface with the speed reducer 2 sandwiched therebetween. The driver 4 can be moved back and forth in the vertical direction by rotation of the motor 3 in the forward direction or the backward direction. That is, the driver 4 is linearly moved back and forth in the vertical direction without rotation.

The hard disk fixing stand 5 is located below the driver 4. Guiding members 6 for arranging a hard disk (a recording medium) 15 at a predetermined position is provided on the hard disk fixing stand 5. The hard disk 15 guided by the guiding members 6 is arranged on the hard disk fixing stand 5 so as not to be horizontally movable such that at least one of the pins 1 is positioned just above its data recording portion.

A push button switch 7 is located on the hard disk fixing stand 5. The switch 7 is pushed down by a lower surface of the hard disk 15 when the hard disk 15 is arranged on the hard disk fixing stand 5, and has the function of detecting that the hard disk 15 is arranged on the hard disk fixing stand 5 and transmitting a detection signal to the monitoring device 50, described later, through a signal line (not shown).

In the recording medium destruction apparatus 90 according to the present embodiment, when a work start switch (not shown) is turned on, the motor 3 is rotated in the forward direction, so that the driver 4 falls. The pins 1 in the driver 4 deform the hard disk 15 by pressing, and further penetrate the recording portion of the hard disk 15. In such a way, after the hard disk 15 is destroyed, the motor 3 is rotated in the backward direction, so that the driver 4 rises to return to a stand-by position.

The monitoring device 50 includes the video camera 10 and a controller 21. The controller 21 has a CPU 8 and a memory 9. The controller 21 and the video camera 10 are connected to each other by a signal line 11. The controller 21 can operate the video camera 10 through the signal line 11. Further, a video picked up by the video camera 10 can be recorded on the memory 9 in the controller 21 through the signal line 11.

The controller 21 is connected to the switch 7 by a signal line (not shown). The switch 7 detects that the hard disk 15 is arranged on the hard disk fixing stand 5, and transmits a detection signal to the controller 21. The controller 21 in which the detection signal has been inputted transmits an image pickup start instruction signal to the video camera 10.

The video camera 10 starts, when it receives the image pickup start instruction signal from the controller 21, to pick up an image of the hard disk 15 arranged on the hard disk fixing stand 5, while terminating, when it receives an image pickup termination instruction signal, the image pickup. Video data obtained by the image pickup is transmitted to the memory 9 in the controller 21 through the signal line 11, and is recorded thereon.

The hard disk 15 is arranged on the hard disk fixing stand 5, and the controller 21 in which the detection signal has been inputted from the switch 7 issues a code number, and records on the memory 9 the code number and the date (including time) on which the detection signal has been received as one related data (e.g., preferably data in a versatile format such as a CSV (Comma Separated Value) text data format).

That is, this code number is inherent one, assigned to the hard disk 15, which will be subjected to destruction from now, on the hard disk fixing stand 5. Data indicating when the hard disk 15 was destroyed, together with the video data, is recorded on the memory 9.

Furthermore, the manufacturing number of the recording medium destruction apparatus 90 itself may be simultaneously recorded on the memory 9. That way, it can be verified when the hard disk 15 was destroyed and which destruction apparatus has destroyed the hard disk 15. Therefore, an owner of the hard disk 15 can discard the hard disk 15 with a sense of security.

Although description was made of the example in which the hard disk 15 is destroyed, it is possible to record, irrespective of the type of the recording medium to be destroyed, video data obtained by picking up an image of situations where the recording medium has been destroyed and the date of the image pickup and a code number assigned to the recording medium on the memory 9 in the controller 21.

Although description was made of the example in which the video data is recorded on the memory 9, a still image camera such as a digital camera can be employed in place of the video camera 10. It is preferable that the number of still images in the case is plural. At least one of the still images is recorded on the memory 9 as image data obtained by picking up an image of situations where the recording medium has been destroyed. A second embodiment, described later, is the same.

Although description was made of the example of the recording medium destruction apparatus 90 that drives the driver 4 using the electric motor 3 and the speed reducer 2, to press and destroy the hard disk 15, a driving source of the driver 4 in the recording medium destruction apparatus 90 may be one that drives the driver 4 at hydraulic pressure, water pressure, or pneumatic pressure, in which case situations where the hard disk 15 has been destroyed can be monitored without any problem by the monitoring device 50.

In the above-mentioned embodiment, description was made of the example in which the monitoring video camera 10 or digital camera is provided at a position different from the fixing stand 20 for fixing the motor 3. That is, in the foregoing embodiment, the monitoring device 50 is separately provided, and the video camera 10 or the like is disposed in the monitoring device 50. Although the video camera 10 employed in the previous embodiment entirely picks up an image of the process of destructing the hard disk 15, another video may be picked up. For example, an image of the main body device 51 in the recording medium destruction apparatus 90 may be picked up by giving a turning function to the video camera 10. That is, a still image or a moving image for specifying the recording medium destruction apparatus 90 itself may be picked up and recorded. Respective images of the face of a worker and its surroundings may be picked up.

Furthermore, the video camera 10 or the like may be provided integrally with the fixing stand 20 or the like.

Description is now made of an embodiment having a configuration in which an image of the face of the worker, for example, is picked up added thereto. In the following description, a member having the same function and effect as those in the previous embodiment is assigned the same number as that in the previous embodiment, to omit the detailed description thereof.

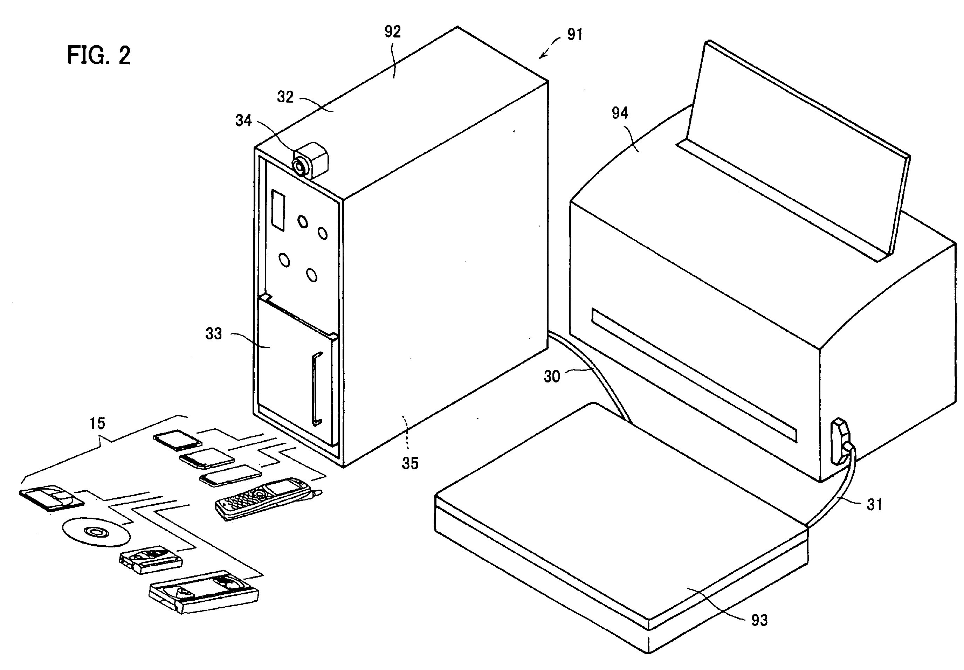

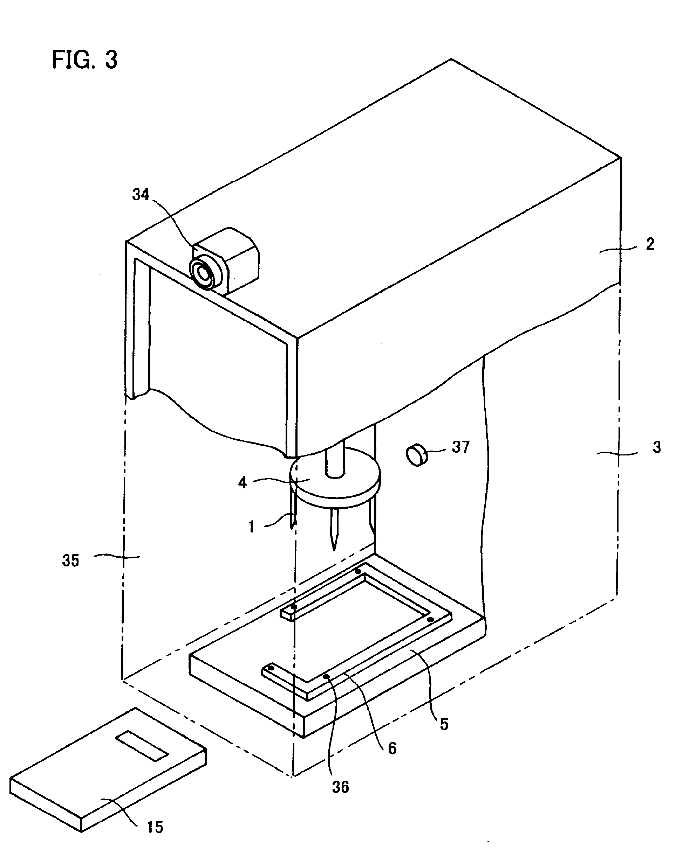

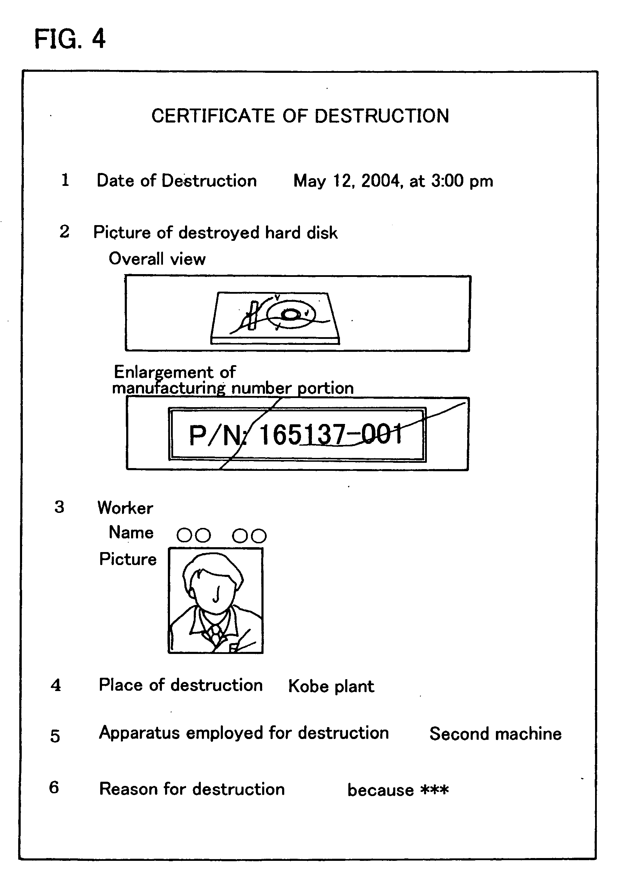

Fig. 2 is a diagram showing the overall configuration of a recording medium destruction apparatus 91 according to a second embodiment of the present invention. Fig. 3 is a partially broken perspective view showing the internal configuration of a main body device in the recording medium destruction apparatus 91 shown in Fig. 2. Fig. 4 is a front view showing an example of a certificate of destruction printed by the recording medium destruction apparatus 91 shown in Fig. 2.

The recording medium destruction apparatus 91 according to the second embodiment includes a main body device 92, a personal computer 93, and a printer (printing means) 94, as shown in Fig. 2, which are connected to one another by signal cables 30 and 31.

The main body device 92 is substantially the same as the main body device 51, previously described, and its components are accommodated within a casing 32, as shown in Figs. 2 and 3.

The casing 32 has a door 33 on its front face, and its inner part is an operation chamber 35, as shown in Fig. 3.

In the present embodiment, a worker image pickup video camera 34 is mounted on the top of the casing 32.

The worker image pickup video camera 34 is for picking up an image of the outside of the casing 32, and is installed at such a position that an image of a person who has approached the door 33 can be picked up and at a mounting angle.

Substantially the same components as those of the main body device 51, previously described, are contained within the casing 32, as described above. Specifically, an electric motor 3, a speed reducer 2, and a driver 4 are within the casing 32, and a hard disk fixing stand 5 is located below the driver 4. The hard disk fixing stand 5 is within the operation chamber 35, described above, and is provided with a guiding member 6 for arranging the hard disk 15 at a predetermined position.

In the present embodiment, the guiding member 6 is attached detachably by screws 36, and is replaceable with a guiding member that coincides with the shape of the hard disk 15 to be destroyed. The recording medium destruction apparatus 91 according to the present embodiment can also destroy a recording medium other than the hard disk 15, for example, a recording medium utilizing light such as DVD (Digital Versatile Disc) or MO (Magnet Optical) as shown in Fig. 2 or a recording medium utilizing magnetism such as a flexible disk, so that the guiding member 6 can be replaced with another guiding member that coincides with the shape thereof. Further, although the recording medium destruction apparatus 91 according to the present embodiment can also destroy a cellular phone itself and each of recording media contained in the cellular phone, as shown in Fig. 2, the guiding member 6 can be replaced with still another guiding member that coincides with the shape thereof when they are destroyed.

Also in the present embodiment, the motor 3 is provided with the speed reducer 2, the driver 4 is moved back and forth in the vertical direction within the operation chamber 35 by rotation of the motor 3 in the forward direction or the backward direction, and the hard disk 15 is destroyed by being pierced with pins 1 provided in the driver 4.

In the present embodiment, an object-to-be-destroyed image pickup video camera 37 is installed, as shown in Fig. 3, in the operation chamber 35 within the casing 32.

The object-to-be-destroyed image pickup video camera 37 is installed at such a position and at a mounting angle where an image of the top of the hard disk fixing stand 5 can be picked up. More preferably, the object-to-be-destroyed image pickup video camera 37 is installed at such a position and at a mounting angle where an image of an upper surface of the hard disk 15 to be destroyed can be picked up. That is, although the hard disk 15 is generally covered with a casing made of a metal or resin, there is a seal or a printing surface on its one surface, and a maker and a manufacturing number are written down on the seal or the like. An image of the manufacturing number or the like of the hard disk 15 can be picked up by installing the object-to-be-destroyed image pickup video camera 37 at such a position where an image of the upper surface of the hard disk 15 to be destroyed can be picked up, so that information related to a still image or a moving image for specifying the destroyed recording medium can be obtained.

The personal computer 93 controls the worker image pickup video camera 34, the object-to-be-destroyed image pickup video camera 37, and the printer. Further, the personal computer 93 also functions as bibliographic information recording means. Bibliographic information may be manually entered using a keyboard of the personal computer 93, or information may be read out of a predetermined memory and recorded thereon.

The following are examples of the bibliographic information:
(1) Information for specifying the place where a recording medium destruction apparatus is installed
(2) Information for specifying the time when a recording medium was destroyed
(3) Information for specifying a person who has operated a recording medium destruction apparatus
(4) Information for specifying a destroyed recording medium
(5) Information for specifying a recording medium destruction apparatus itself
(6) Information for specifying the reason for destroying a recording medium
(7) Information for specifying the original owner of a destroyed recording medium
(8) Information for specifying a person who has requested to destroy a recording medium

Here, "Information for specifying the place where a recording medium destruction apparatus is installed" is, for example, an address at which the recording medium destruction apparatus 91 according to the present embodiment is installed. In a case where an employer who destroys a recording medium owns a plurality of business places, and the business places respectively have alleviated names "Kobe plant" and "Amagasaki plant", the abbreviated names may be recorded. The code number of each of the business places may be recorded.

"Information for specifying the time when a recording medium was destroyed" means the date of working, and is recorded as "May 12, 2004, at 3:00 pm", for example.

"Information for specifying a person who has operated a recording medium destruction apparatus" means the name, the code number, etc. of a worker.

"Information for specifying a destroyed recording medium" means the manufacturer and the manufacturing number of a recording medium.

"Information for specifying a recording medium destruction apparatus itself' means information for specifying equipment, for example, "First machine" or "Second machine" when an employer who destroys a recording medium owns a plurality of recording medium destruction apparatuses.

"Information for specifying the reason for destroying a recording medium" means recorded information, for example, "It is destroyed before being returned because lease expires" and "A personal computer has been replaced with a new machine".

"Information for specifying the original owner of a destroyed recording medium" means the name or the designation of an owner of a personal computer or the like having a recording medium mounted thereon.

"Information for specifying a person who has requested to destroy a recording medium" means the name or the designation of an individual or a juridical person who has requested to destroy a recording medium.

As described in the foregoing, the personal computer 93 controls the worker image pickup video camera 34 and the object-to-be-destroyed image pickup video camera 37, and videos respectively picked up by the video cameras 34 and 37 can be recorded on a memory within the personal computer 93.

Description is now made of a method of employing the recording medium destruction apparatus 91 according to the present embodiment.

In employing the recording medium destruction apparatus 91 according to the present embodiment, the door 33 of the main body device 92 is opened, to

mount the hard disk 15 to be destroyed on the operation chamber 35 in its interior.

The door 33 is closed, and a predetermined work start switch is turned on.

In the present embodiment, there is a limit switch (not shown) on the door 33, and the driver 4 is not operated unless closure of the door is sensed.

When the work start switch is turned on, the motor 3 is rotated in the forward direction, as in the previous embodiment, so that the driver 4 falls to deform the hard disk, and the pins 1 further penetrate a recording portion of the hard disk. Thereafter, the motor 3 is rotated in the backward direction, so that the driver 4 rises to return to a stand-by position.

In the present embodiment, the worker image pickup video camera 34 and the object-to-be-destroyed image pickup video camera 37 are operated during a series of operations, described above.

That is, at the same time the work start switch is turned on, the worker image pickup video camera 34 starts image pickup, to record situations where a worker performs the operations as a moving image. At this time, an image of not only the figure of the worker but also the surroundings of the place where the recording medium destruction apparatus 91 itself is installed is picked up. Information related to the moving image is recorded on the memory within the personal computer 93.

The object-to-be-destroyed image pickup video camera 37 picks up an image of the hard disk 15. Therefore, the object-to-be-destroyed image pickup video camera 37 records respective videos before, at the moment of, and after destruction of the hard disk 15 as moving images.

As described in the foregoing, when the object-to-be-destroyed image pickup video camera 37 is installed at such a position and at a mounting angle where an image of the upper surface of the hard disk 15 to be destroyed can be picked up, an image of the manufacturing number or the like of the hard disk 15 can be picked up, so that information related to a moving image for specifying the destroyed recording medium is obtained.

As in the previous embodiment, the personal computer 93 assigns a code number to the hard disk to be destroyed, and video data, together with the code number, is recorded on the memory in the personal computer 93. Further, in the present embodiment, bibliographic information, together with the code number, is recorded.

When a series of operations is finished, or after a lot of hard disks are destroyed so that video data and others are stored, a certificate of destruction is printed by the printer 94. The certificate of destruction conforms to a format as shown in Fig. 4, for example, and contains the date of destruction, the overall picture of the destroyed hard disk, enlargement of a manufacturing number portion of a picture of the destroyed hard disk, the name of a worker and a picture of his or her face, a working place, an apparatus used for destruction, and the reason for destroying the hard disk.

In one example, the certificate of destruction shown in Fig. 4 is entitled "CERTIFICATE OF DESTRUCTION" in its uppermost part, and contains "Date of destruction: May 12, 2004, at 3:00 pm" in an item 1, "Picture of destroyed hard disk" in an item 2, a picture corresponding to the overall view of a destroyed hard disk printed under characters "Overall view" thereunder, a closeup picture of a manufacturing number portion of the destroyed hard disk printed under characters "Enlargement of manufacturing number portion" thereunder, "Worker" in an item 3, characters "Name", followed by the name of a worker thereunder, characters "Picture", followed by a picture of the worker thereunder, "Place of destruction: Kobe plant" in an item 4, "Apparatus employed for destruction: Second machine" in an item 5, and "Reason for destruction", followed by the reason for destruction, in an item 6.

The overall picture of the destroyed hard disk and the enlargement of the manufacturing number portion of the picture of the destroyed hard disk are selected out of videos picked up by the object-to-be-destroyed image pickup video camera 37. Further, the picture of the face of the worker is selected out of the videos picked up by the worker image pickup video camera 34.

The certificate of destruction is sent to a client.

Description is now made of a modified example of the present invention.

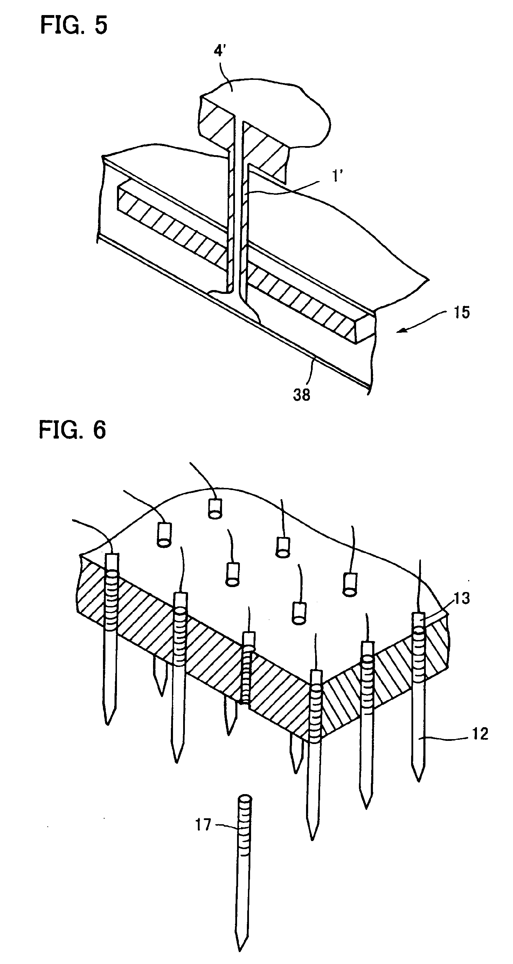

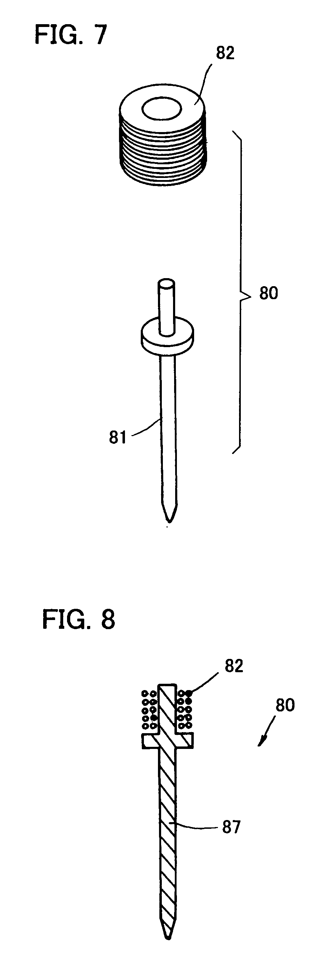

Fig. 5 is a sectional perspective view of a principal part in a state where a pin on a driver penetrates a hard disk 15, showing a modified example of the driver. Fig. 6 is a partially sectional perspective view of a driver in a recording medium destruction apparatus having an electrical force added thereto. Fig. 7 is an exploded perspective view of a pin employed in a recording medium destruction apparatus according to still another embodiment of the present invention. Fig. 8 is a cross-sectional view of the pin shown in Fig. 7.

Although the above-mentioned embodiment employs the driver 4 including the plurality of pins 1 for piercing the hard disk 15 with the pins 1 provided on the driver 4, to destroy the hard disk 15, a configuration in which a casing of the hard disk 15 is filled with adhesive resin is also recommended in addition thereto.

As shown in Fig. 5, for example, a pin 1' in a driver 4' is hollowed out to flow adhesives into the hollowed pin 1'. After the hard disk 15 is pierced with the pin 1', the adhesives are introduced into a casing 38 of the hard disk 15 through the pin 1'.

The reason why the adhesives are thus introduced into the casing 38 is as follows. That is, if data is forced to be read from the destroyed hard disk, the hard disk itself must be taken out of the casing. To that end, the deformed casing must be forced open. Here, if the adhesives are introduced into the casing 38 of the hard disk 15, as in the present embodiment, a recording surface of the hard disk, together with the casing, is stripped in forcing the casing open. If a measure to fill the casing of the hard disk 15 with the adhesive resin is employed, as in the present embodiment, therefore, the hard disk 15 is difficult to take out from the casing of the hard disk 15, so that security is high.

Although in each of the above-mentioned two embodiments, the recording medium is destroyed only by a physical force, the recording medium can be also destroyed more completely by adding an electrical force thereto.

As in the embodiment shown in Fig. 6, for example, an electrode 13 is attached to each of pins 12, and a high voltage is applied to the pins 12. Therefore, the high voltage flows in the recording medium from the pins 12 with which the recording medium has been pierced, so that the recording medium is destroyed.

That is, when any pin 12 comes into contact with the recording medium itself or printed wiring that communicates with the recording medium, a current flows in the recording medium, so that the recording medium is short-circuited and destroyed. Therefore, according to this configuration, the recording medium is destroyed more reliably.

Furthermore, a measure to destroy the recording medium by adding a magnetic force thereto is also recommended in place of or in addition to the application of the high voltage.

For example, a permanent magnet is employed for the pins 1 and 12. Alternatively, a coil 82 is mounted on a part of a pin main body 81 made of a magnetic material, as in a pin 80 shown in Figs. 7 and 8, and the coil 82 is energized to make the pin main body 81 electromagnetic.

According to the present embodiment, a magnetic recording surface of the hard disk or the like is disturbed by magnetism of the pin 80, so that the hard disk or the like is also magnetically destroyed.

Although in the above-mentioned embodiment, the recording medium is destroyed by the pin 1, 12, or 80, the recording medium may be destroyed by an object in a needle shape or a projection in a conical shape or the like.

Although each of the above-mentioned embodiments exemplifies the configuration in which the pins are raised or lowered to penetrate the hard disk 15, the present invention is not particular about this. For example, a measure to crush a hard disk by a press, a measure to destroy a hard disk by a rotating object such as a drill or an end mill, a measure to bend or fold a hard disk by applying bending stress, a measure to destroy a hard disk by twisting, and so on can be employed. In short, the present invention does not consider a specific measure to destroy the recording medium, if the recording medium such as the hard disk is destroyed by such a method that it is found to be apparently destroyed.

Consequently, the recording medium may be destroyed not only by a physical force but also by applying an electromagnetic wave, a magnetic field, heat, or the like thereto. For example, an optical recording medium such as an optical disk has an evaporated aluminum film formed on its surface, and a signal is recorded on the evaporated aluminum film. The evaporated aluminum film is destroyed by generating heat when it is heated by applying heat energy from a heat source or an electromagnetic wave belonging to a microwave is applied thereto. The situations of the destruction can be visually confirmed, so that there is probability to apply the present invention.

Description is now made of another embodiment of the present invention while referring to the drawings.

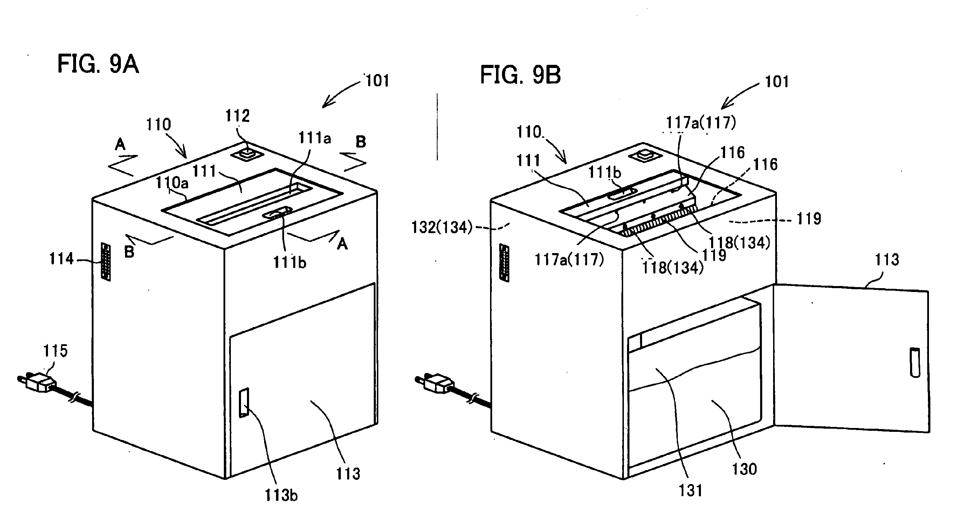

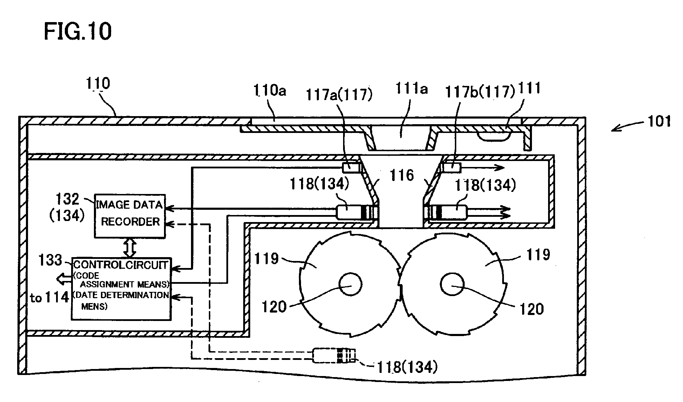

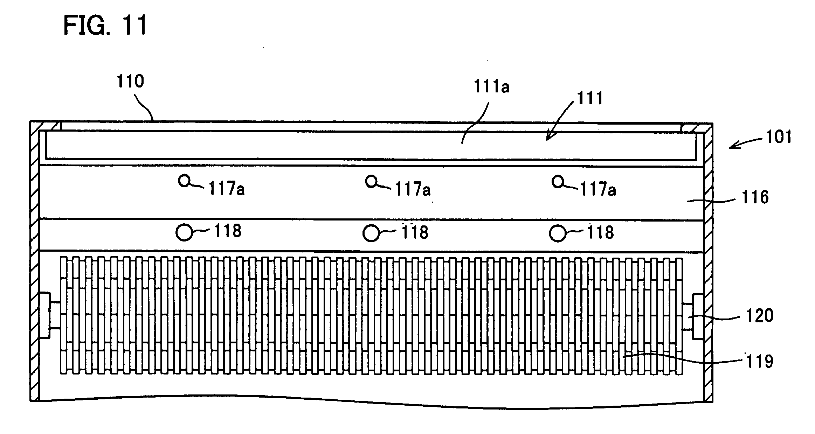

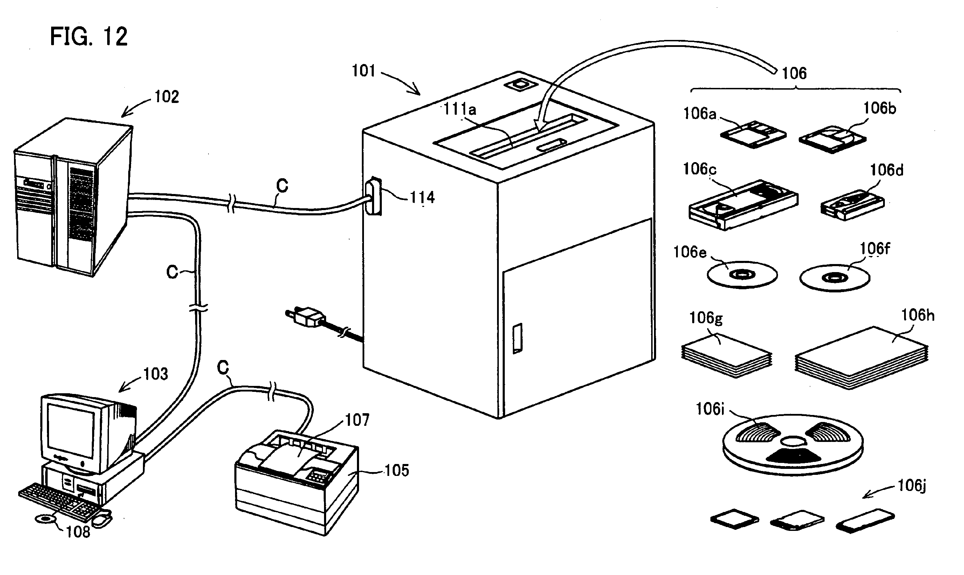

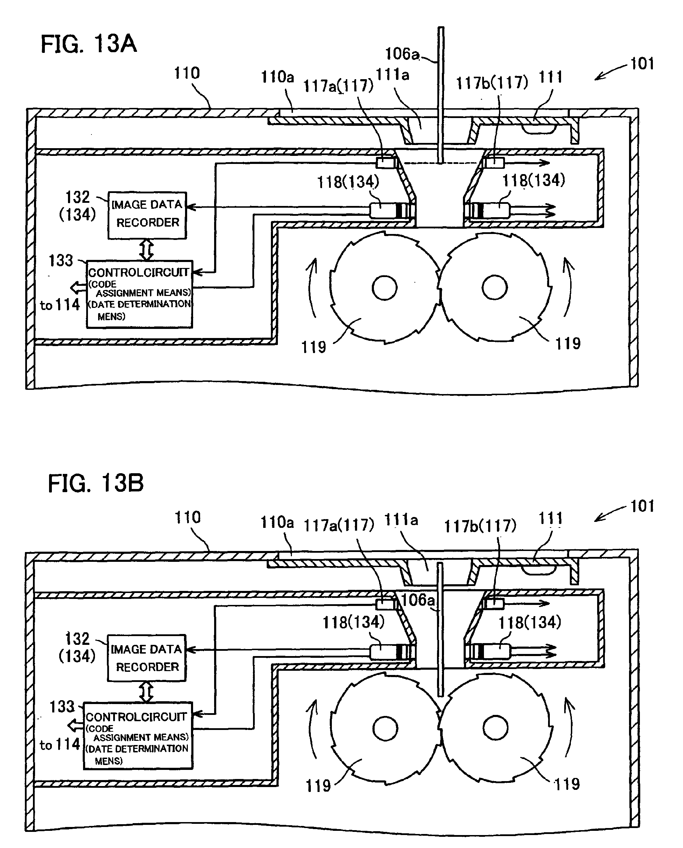

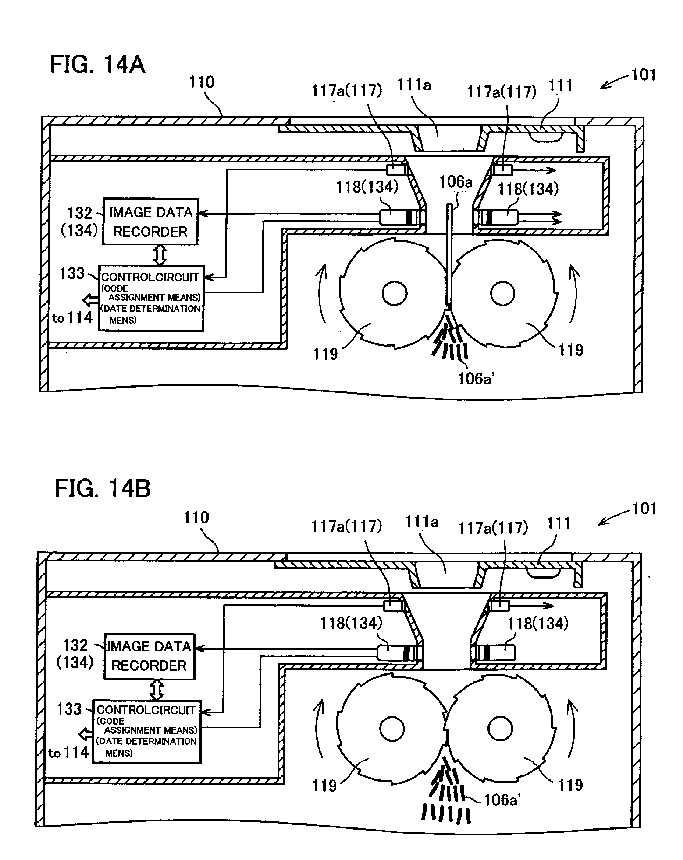

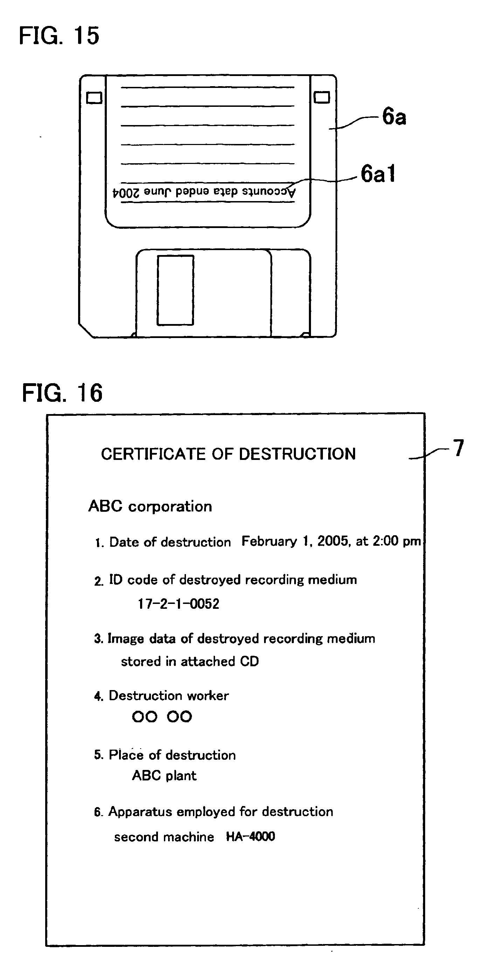

Figs. 9A and 9B are perspective views showing a recording medium destruction apparatus 101 using a plurality of cylindrical rotary cutting edges according to the embodiment of the present invention, Fig. 10 is a cross-sectional view taken along a line A - A shown in Fig. 9A, Fig. 11 is a cross-sectional view taken along a line B - B shown in Fig. 9A, Fig. 12 is a diagram showing an example of the configuration of a destruction system using the recording medium destruction apparatus 101 shown in Figs. 9A and 9B, Figs. 13A and 13B are cross-sectional views showing a state immediately before destruction of a recording medium inserted into the recording medium destruction apparatus 101 shown in Figs. 9A and 9B, Figs. 14A and 14B are cross-sectional views showing a state where the recording medium inserted in Figs. 13A and 13B is destroyed, Fig. 15 is a diagram for describing image data recorded by the recording medium destruction apparatus 101, and Fig. 16 is a diagram for describing a certificate of destruction issued by the destruction system shown in Fig. 12.

The recording medium destruction apparatus 101 according to the present embodiment is an apparatus including both the function of recording the inserted recording medium as a moving image and the function of cutting and destroying the recording medium within a main body casing 110, as shown in Fig. 9A.

Description is made in sequence. The main body casing 110 is in a rectangular parallelepiped shape, as shown in Fig. 9A. Image recording means 134, a control circuit 133 for controlling each of units, and a pair of cylindrical rotary cutting edges 119 are contained, as shown in Fig. 10, in an upper part of the inside of the main body casing 110.

A power switch 112 is disposed at the rear of an upper face of the main body casing 110, and an AC code is pulled out from a lower part of a rear face thereof. A connector 114 for connecting a control device such as a server or a personal computer, described later, is provided at the rear of an upper part of a left side face thereof.

A square opening 110a is provided on an upper face of the main body casing 110, and a sliding cover 111 of a sliding type for opening or closing the opening 1 10a is provided thereon.

The main body casing 110 has a door 113 having a handle 113a provided in a lower part of its front face.

The sliding cover 111 is provided with an insertion port 111a in the shape of a slit over substantially the whole length in the width direction, and a handle 111b is disposed at the front thereof, as shown in Fig. 9A. When the sliding cover 111 is closed by being slid forward, the insertion port 111a is positioned at the center in the longitudinal direction of the opening 110a.

A pair of housings 116 are disposed opposite to each other, as shown in Figs. 9B and 10, below the sliding cover 111, and a pair of cylindrical rotary cutting edges 119 are disposed below the housings 116.

The housings 116 are positioned below the sliding cover 111 along the slit of the insertion port 111a, and are disposed such that the insertion port 111a is interposed from the front and the rear thereof when the sliding cover 111 is closed.

The rotary cutting edges 119 are disposed below the housings 116 along the slit of the insertion port 111a.

The door 113 can be opened sideward with the handle 113a grasped, as shown in Fig. 9B. When the door 113 is opened, an accommodation box 130 on which an accommodation bag 131 is mounted is accommodated inside the door 113. The accommodation box 130 (the accommodation bag 131) is for accommodating cutting pieces of a destroyed recording medium.

The housings 116 are inclined such that upper parts from substantially central parts of their surfaces along the insertion port 111a are enlarged upward, and a light emitting element 117a and a light receiving element 117b are respectively arranged opposite to each other at upper ends of the inclined portions, as shown in Fig. 10. The light emitting element 117a and the light receiving element 117b form a photoelectric sensor 117. The photoelectric sensor 117 has the function of detecting an object when light beam from the light emitting element 117a to the light receiving element 117b is shielded. Three photoelectric sensors 117 are disposed in the vicinities of the center and both ends in the width direction of the housing 116, as shown in Fig. 11.

Three video cameras 118 for one of the housings 116 and three video cameras 118 for the other housing 116 (a total of six video cameras 118) are respectively arranged below the light emitting elements 117a and the light receiving elements 117b and on vertical surfaces below substantially central parts of surfaces along the insertion port 111a between the housings 116.

That is, the three photoelectric sensors 117 are disposed below the insertion port 111a, the three and three (a total of six) video cameras 118 are respectively disposed opposite to each other below the photoelectric sensors 117, and the pair of rotary cutting edges 119 are disposed below the video cameras 118.

Consequently, a recording medium 106 that falls upon being inserted from the insertion port 111 a is so adapted that its image can be picked up by at least one of the video cameras 118.

As shown in Fig. 10, each of the three photoelectric sensors 117 is connected to the control circuit 133, and each of the six video cameras 118 is connected to the image data recorder 132 and the control circuit 133.

In the present embodiment, the video camera 118 and the image data recorder 132 form image recording means 134.

A bus line extending from the control circuit 133 is connected to the connector 114 (see Figs. 9A and 9B) to be connected to a control device.

The control circuit 133 has a combination of code assignment means for sequentially producing different ID codes and date determination means for determining a date. Further, the control circuit 133 previously stores device data inherent in the recording medium destruction apparatus 101.

The rotary cutting edge 119 is constructed by arranging a lot of circular edges on a rotary shaft 120 disposed along the slit of the insertion port 111a, as shown in Figs. 10 and 11. In the present embodiment, a cutting form for making so-called crosscut for cutting the recording medium in the longitudinal and transverse directions by the rotary cutting edges 119 is employed.

The respective rotary shafts 120 of the rotary cutting edges 119 are driven to rotate inward by an electric motor (not shown).

The recording medium destruction apparatus 101 enters such a stand-by state that power is supplied to each of the units including the control circuit 133 and the image recording means 134 from a power supply circuit (not shown) so that destruction can be started by turning the power switch 122 on.

In the present invention, an electric motor (not shown) forcedly stops driving to rotate by detection using a detection switch (not shown) when the sliding cover 111 is opened, to provide a safety measure to avoid the danger of winding in the rotary cutting edges 119.

The recording medium destruction apparatus 101 according to the present embodiment thus configured is employed in a destruction system constructed by being connected to a server (a control device) 102, as shown in Fig. 12.

In the system shown in Fig. 12, a terminal 103 for performing data processing is connected to a server 102, and a printer 105 is connected to the terminal 103.

Referring now to Figs. 12 to 16, description is now made of operations for recording medium destruction performed by the recording medium destruction apparatus 101 according to the present embodiment.

In the destruction system shown in Fig. 12, the power switch 112 in the recording medium destruction apparatus 101 is switched to ON, to insert the recording medium 106 to be destroyed into the insertion port 111a.

Examples of the recording medium 106 that can be destroyed include magnetic recording media such as a flexible disk (FD) 106a, a magneto-optical disk (MO) 106b, a VHS video tape 106c, and a 8mm video tape 106d, or optical recording media such as a compact disc (CD) 106e and a digital versatile disc (DVD) 106f. Recording paper such as recording paper 106g having characters and graphics recorded thereon and data recording paper 106h printed by a printer or a magnetic tape 106i used for a general purpose computer or the like, and further a memory card 106j, etc., can be also destroyed.

The flexible disk (FD) 106a will be explained as the recording medium 106 to be destroyed by means of example. When the FD 106a to be destroyed is inserted into the insertion port 111a, the insertion of the FD 106a is detected by the photoelectric sensor 117 at the time point where light emitted from the light emitting element 117a is shielded by a lower end of the FD 106a that is falling, so that a detection signal is transmitted to the control circuit 133, as shown in Fig. 13A.

The control circuit 133 starts to pick up a moving image using the video cameras 118 upon receipt of the detection signal, so that image data obtained by the image pickup is recorded as a file on the image data recorder 132. At this time, the control circuit 133 produces an ID code by the code assignment means, and finds data representing a date at this time by the date determination means, to transmit the ID code and the date data, together with device data previously stored in the control circuit 133, to the image data recorder 132. Thus, the date data, the ID code, and the device data are added to the file of image data recorded on the image data recorder 132. The control circuit 133 energizes an electric motor (not shown), to start to drive the rotary cutting edges 119 to rotate upon receipt of the detection signal.

When the FD 106a is detected by the photoelectric sensors 117, respective images of both surfaces of the FD 106a that is falling are thereafter picked up by the video cameras 118, as shown in Fig. 13B. Consequently, image data including a title "Accounts data ended June 2004" written down on the surface of the FD 106a is recorded as one file on the image data recorder 132, as shown in Fig. 15.

When the recording paper 106g and the data recording paper 106h shown in Fig. 12 are inserted as the recording medium 106, the contents of write-down on the recording papers 106g and 106h are recorded as image data.

An FD 6a that has fallen to the rotary cutting edges 119 is caught in and cut, as shown in Figs. 14A and 14B, so that cutting pieces 106a' fall into the accommodation bag 131 mounted on the accommodation box 130 (see Fig. 9B) arranged in the lower part and are stored therein.

The control circuit 133 returns, when a predetermined time period (set to approximately 10 seconds in the present embodiment) has elapsed from the time when the detection by the photoelectric sensor 117 is released as the FD 106a falls, the video cameras 118 to a stand-by state, to stop the recording of image data by the image data recorder 132 as well as to stop driving the rotary cutting edges 119 to rotate by the motor (not shown).

In this state, image data of the FD 106a having date data, an ID code, and device data added thereto is recorded as one file on the image data recorder 132.

On the other hand, the control circuit 133 continues, when another recording medium 106 is successively inserted into the insertion port 111a before a predetermined time period (approximately 10 seconds) elapses from the time when the detection by the photoelectric sensors 117 is released, image pickup by the video camera 118, to continuously recode image data obtained by the image pickup on the image data recorder 132.

When the recording media 106 are successively inserted before the predetermined time period elapses, all image data in the recording media 106 successively inserted constitute one file, and an ID code, date data, and device data are added to the file.

In destroying the recording media 106 that differ in clients, therefore, the recording media are inserted at intervals of not less than the predetermined time period (approximately 10 seconds) so that the recording media are distinguishable by respectively assigning different ID codes to the files of image data.

By the foregoing operations, the inserted recording media 106 (FDs 106a) are stored as cutting pieces 106' (106a') in the accommodation box 130, and the files of image data respectively assigned ID codes, date data, and device data are sequentially recorded on the image data recorder 132, to finish the destruction of the recording media 106.

The control circuit 133 transfers, when the capacity of the files of image data on the image data recorder 132 reaches a predetermined value, or the recording of the image data is stopped, the image data recorded on the image data recorder 132 to the server 102 through a cable C connected to the connector 114.

Consequently, the files of image data respectively assigned the ID codes, the date data, and the device data are sequentially transferred to the server 102.

A worker produces a certificate of destruction when a series of destruction operations of the recording media 106 is finished. The certificate of destruction is produced by the following procedure.

First, a terminal is operated, to add client data representing the name of a client, worker data representing a worker or a manager who has performed destruction, and working place data representing a working place where the destruction has been performed to a file of image data having an ID code, date data, and device data added thereto.

When the ID code is then designated, to start to produce a certificate of destruction, a certificate of destruction 107 shown in Fig. 16 is printed by the printer 105 and discharged. In one example, the certificate of destruction 107 shown in Fig. 16 is entitled "CERTIFICATE OF DESTRUCTION" in its uppermost part, and contains the name of a client "ABC Corporation" in the following line, "The date of destruction: February 1, 2005, at 2:00 pm" in an item 1, "ID code of destroyed recording medium: 17-2-1-0052" in an item 2, "Image data of destroyed recording medium: stored in attached CD" in an item 3, the name of a worker who has performed destruction under characters "Destruction worker" in an item 4, "Place of destruction: ABC plant" in an item 5, and "Apparatus employed for destruction: Second machine HA-4000" in an item 6.

As shown in Fig. 12, a writable compact disc (CD) 108 is installed in the terminal 103, so that the file of image data assigned the designated ID code is copied on the CD 108.

The CD 108 storing the certificate of destruction 107 thus produced and the image data is sent to the client, so that the destruction of the series of recording media is completed.

Although in the present embodiment, the configuration in which the image data is stored in the CD 108 is employed, a configuration in which an image is printed on the certificate of destruction 107 itself or its attached document can be also employed.

According to the recording medium destruction apparatus 106 in the present embodiment, the inserted recording medium 106 is thus cut and destroyed while an image of the inserted recording medium 106 is being picked up, the certificate of destruction 107 and image data obtained by the image pickup (the CD 108) are sent to the client.

Consequently, the client can know information related to the date on which destruction has been performed, a worker, a destruction plant, an apparatus, and so on by referring to the certificate of destruction 107, and can confirm that the destroyed recording medium 106 has been requested by referring to the image data recorded on the CD 108.

Thus, the client can reliably confirm that the recording medium 106 left to the worker has been reliably subjected to destruction without being discarded and stolen as it is without being destroyed.

That is, according to the recording medium destruction apparatus 101 in the present invention, the client can confirm that the recording medium 106 has been reliably subjected to destruction, so that a third person other than the client can efficiently subject the recording medium to destruction while ensuring the secrecy of recorded data.

Although in the present embodiment, the configuration in which an image of the recording medium 106 immediately before destruction is picked up is employed, it is also possible to employ a configuration in which the video camera 118 is added and arranged below and in the vicinity of the rotary cutting edge 119 to simultaneously pick up and record respective images of cutting pieces discharged after cutting the recording medium 10.

According to this configuration, the client is allowed to more definitely confirm that the recording medium 106 has been subjected to destruction.

In the present embodiment, when the recording media 106 are successively inserted at shorter intervals than the predetermined time period (approximately 10 seconds), a configuration in which data such as an ID code and date data are assigned to one file including image data representing all the recording media 106 continuously inserted is employed. However, it is also possible to employ a configuration in which individual files of image data are discretely formed every time the recording media 106 are inserted, and data such as an ID code and date data are assigned to each of the files.

Although in the present embodiment, a transmission-type sensor in which the light emitting element 117a and the light receiving element 117b are arranged opposite to each other is employed as the photoelectric sensor 117, a reflection-type sensor in which the light emitting element 117a and the light receiving element 117b are integrated with each other can be also employed.

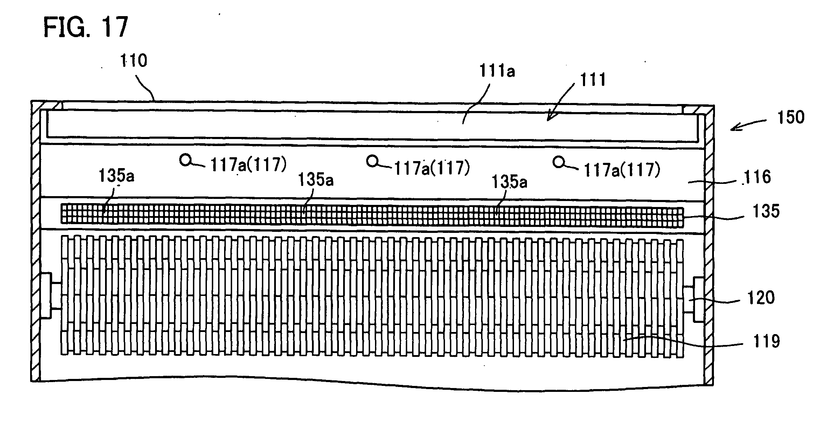

Although in the present embodiment, the configuration in which an image of the recording medium 106 to be destroyed is picked up by the video camera 118 is employed, a configuration using a scanner head in place of the video camera can be also employed. Fig. 17 is a cross-sectional view showing the internal configuration of a recording medium destruction apparatus 150 according to a modified example in correspondence with the sectional perspective view taken along the line B - B shown in Fig. 9A.

The recording medium destruction apparatus 150 has a configuration in which on opposed housings 116, a scanner head 135 having a length over substantially the whole length in the width direction of the housing 116 is mounted, as in Fig. 17. The scanner head 135 is a head having very small scanner elements 135a each formed of a phototransistor or the like arranged along its width (in the row direction) and along its length (in the column direction) for forming an image by pixels respectively captured by the scanner elements 135a.

That is, a configuration in which the scanner head 135 is driven by a detection signal of a photosensitive sensor 117, so that a recording medium 106 that falls across the scanner head 135 is read as image data and transmitted to an image data recorder 132 is employed.

According to this configuration, the long narrow scanner head 135 conforming to the shape of the housing 116 may be fixed opposite thereto, so that space saving and cost saving can be achieved, as compared with those in a configuration in which a plurality of video cameras 118 are arranged.

Furthermore, it is possible to also employ a configuration in which a digital camera (not shown) is arranged in place of the video camera 118 and the scanner head 135, to record a still image obtained by picking up an image of the recording medium 106 on the image data recorder 132.

Meanwhile, the recording medium destruction apparatus 101 described in the above-mentioned embodiment has employed a configuration in which rotary cutting edges 119 having the same shape are arranged and fixed along the rotary shaft 120.

However, the recording media 106 respectively have various shapes, as shown in Fig. 12. For example, the FD 106a, the MO 106b, the memory card, and so on respectively have thin shapes. On the other hand, the VHS video tape 106c, the 8 mm video tape, the magnetic tape 106i, and so on respectively have thick shapes. Although the CD 106e and the DVD 106f are thin, resin material forming them is relatively hard. Further, the recording papers 106g and 106h are thickened and hardened when they are overlapped with each other, although each of them is thin.

Therefore, it is difficult to cut all the recording media 106 by one type of rotary cutting edge 119. In order to efficiently cut the different recording media 106, a plurality of dedicated recording medium destruction apparatuses 101 respectively conforming to the shapes of the recording media 106 must be prepared.

However, employment of a configuration in which the rotary cutting edge 119 is deformed allows a plurality of types of recording media 106 that differ in thickness and hardness to be efficiently destroyed by one recording medium destruction apparatus.

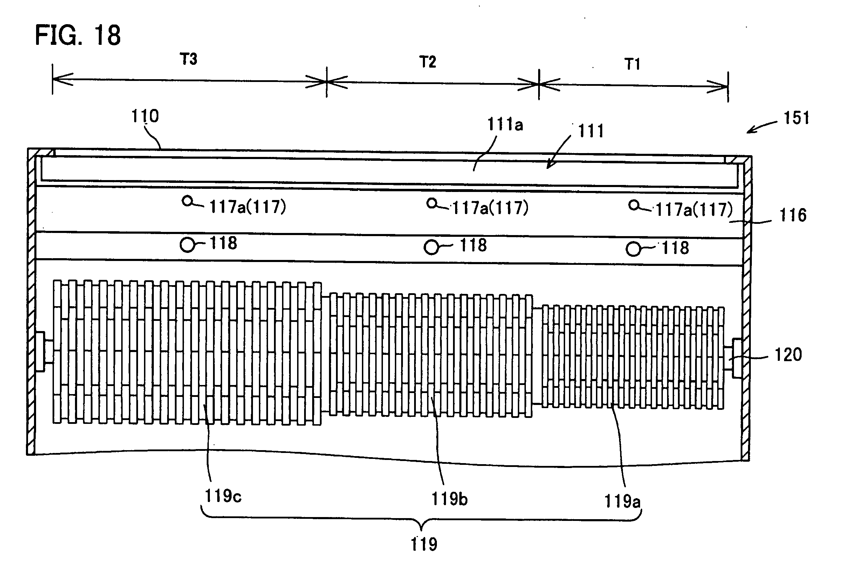

Fig. 18 is a cross-sectional view showing the internal configuration of a recording medium destruction apparatus 151 according to a modified example employing such a configuration in correspondence with the sectional perspective view taken along the line B - B shown in Fig. 9A.

In the recording medium destruction apparatus 151, an insertion port 111a is divided into three insertion regions T1, T2, and T3, as shown in Fig. 18. The slit width of the insertion port 111a is narrow in the region T1, is wide in the region T3, and is intermediate in the region T2.

Each of a pair of cylindrical rotary cutting edges 119 provided in the recording medium destruction apparatus 151 is composed of a plurality of cut regions that differ in outer diameter, and a gap between the cutting edges 119 differs for each of the regions. The cut regions respectively correspond to the insertion regions and correspond to thickness categories of the recording media. Specifically, each of the cutting edges 119 includes three portions, i.e., a first portion 119a, a second portion 119b, and a third portion 119c respectively corresponding to the regions T1, T2, and T3. Both the cutting edges have the same diameter in any area.

That is, a plurality of cut regions are provided along the rotary shaft of the rotary cutting edges, which differ in shape or size, capable of respectively cutting the recording media corresponding to the thickness categories are arranged. The insertion port through which the recording medium is inserted into the recording medium destruction apparatus is composed of a plurality of insertion regions, and the insertion regions respectively correspond to the cut regions.

For example, the region T1 is a region into which the thin recording medium 106 is to be inserted, and has the first rotary cutting edge portions 119a having a small outer diameter arranged therein along the rotary shaft 120. The region T2 is a region where the recording medium 106 thicker than that to be inserted into the region T1 is to be cut, and has the second rotary cutting edge portions 119b having a larger outer diameter than the first rotary cutting edge portions 119a arranged therein along the rotary shaft 120. Further, the region T3 is a region, where the thickest recording medium 106 is to be cut, and has the third rotary cutting edge portions 119c having a larger outer diameter than the second rotary cutting edge portions 119b arranged therein along the rotary shaft 120.

Both the rotary shafts 120 are driven to rotate by one motor (not shown).

A photoelectric sensor 117 and a video camera 118 are respectively arranged above and below, as in the above-mentioned recording medium destruction apparatus 1, at the center in the width direction of each of the regions T1 and T3.

According to the recording medium destruction apparatus 151, the insertion regions T1 and T3 are selected depending on the thickness of the recording medium 106 to be inserted, so that the recording medium 106 can be efficiently cut and destroyed.

Thus, greater cost saving can be achieved, as compared with that in a case where a plurality of dedicated recording medium destruction apparatuses 101 respectively conforming to the shapes of the recording media 106 are installed.

Although in the recording medium destruction apparatus 151 shown in Fig. 18, the cutting form of each of the regions T1 to T3 is set to so-called crosscut, the shape of the rotary cutting edge 119 is made to differ depending on the thickness of the recording medium 106, to cut the thinner recording medium by the above-mentioned crosscut and cut the thicker recording medium by the above-mentioned straight-cut, which allows the durability of the rotary cutting edge 119 to be improved.

Although the above-mentioned recording medium destruction apparatus 151 is so configured that the rotary cutting edge portions 119a to 119c that differ in outer diameter or shape are arranged on the same rotary shaft 120, it is also possible to employ a configuration in which rotary cutting edges that differ in outer diameter or shape are respectively arranged on separate rotary shafts (not shown) and the rotary shafts are respectively driven by separate motors.

Although description was made of the configuration and the operations of the recording medium destruction apparatus 101 (150, 151) according to the embodiment of the present invention, the recording medium destruction apparatus 101 according to the present invention is also applicable to not only the destruction system shown in Fig. 12, described above, but also to a simplified destruction system.

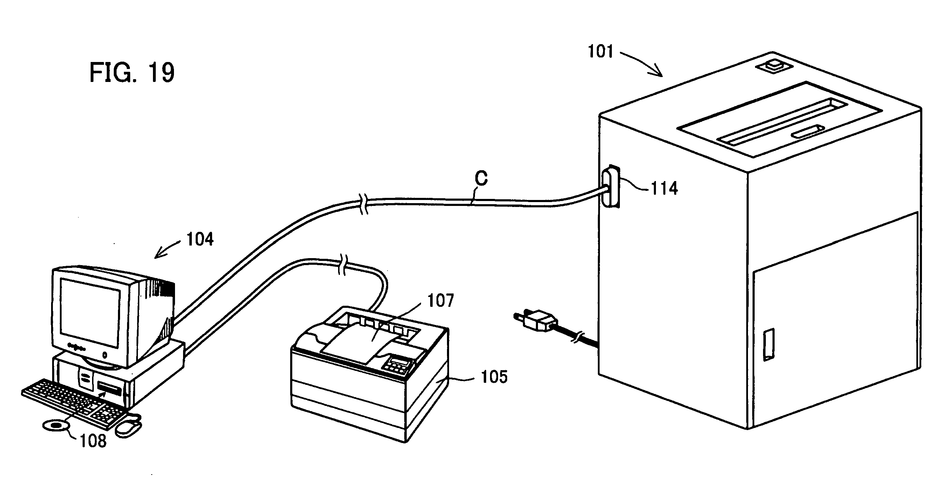

Fig. 19 is a diagram showing an example of the configuration of a destruction system according to a modified embodiment in which the server 102 is removed from Fig. 12, described above.

The system shown in Fig. 19 is formed by connecting a connector 114 in a recording medium destruction apparatus 101 and a personal computer (PC: a control device) 104 to each other using a cable C and connecting a printer 105 to the PC 104.

According to this configuration, image data recorded on an image data recorder 132 is transferred toward the PC 104 by operating the PC 104, and necessary data is added in the PC 104 to the transferred image data so that a certificate of destruction 107 and a CD 108 storing the image data can be produced. Consequently, the system configuration is simplified so that cost saving can be achieved.

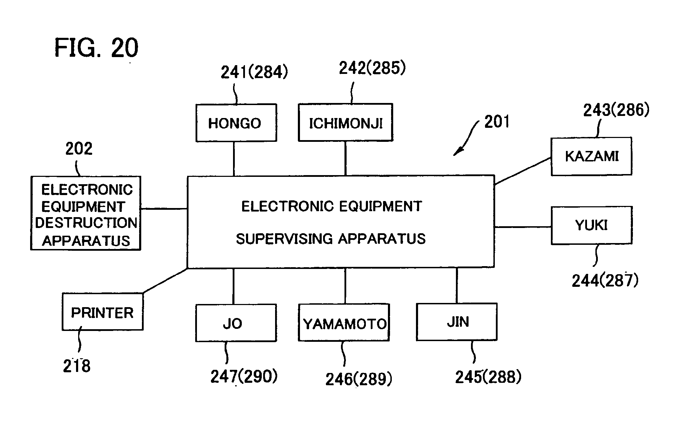

Fig. 20 is a conceptual view of an electronic equipment supervising apparatus in a still further embodiment of the present invention and its peripheral equipment.

The electronic equipment supervising apparatus 201 according to the present embodiment makes use of the known personal computers, and the personal computers are operated by characteristic software.

An electronic equipment destruction apparatus 202 is connected as equipment under supervision by the electronic equipment supervising apparatus 201 according to the present embodiment. All personal computers 241 to 247 employed within a business place are connected to the electronic equipment supervising apparatus 201. Further, a printer 218 is connected to the electronic equipment supervising apparatus 201. Although the "electronic equipment destruction apparatus" herein referred to is one mode of the recording medium destruction apparatus, it is called a "electronic equipment destruction apparatus" in the sense that it can also destroy electronic equipment.

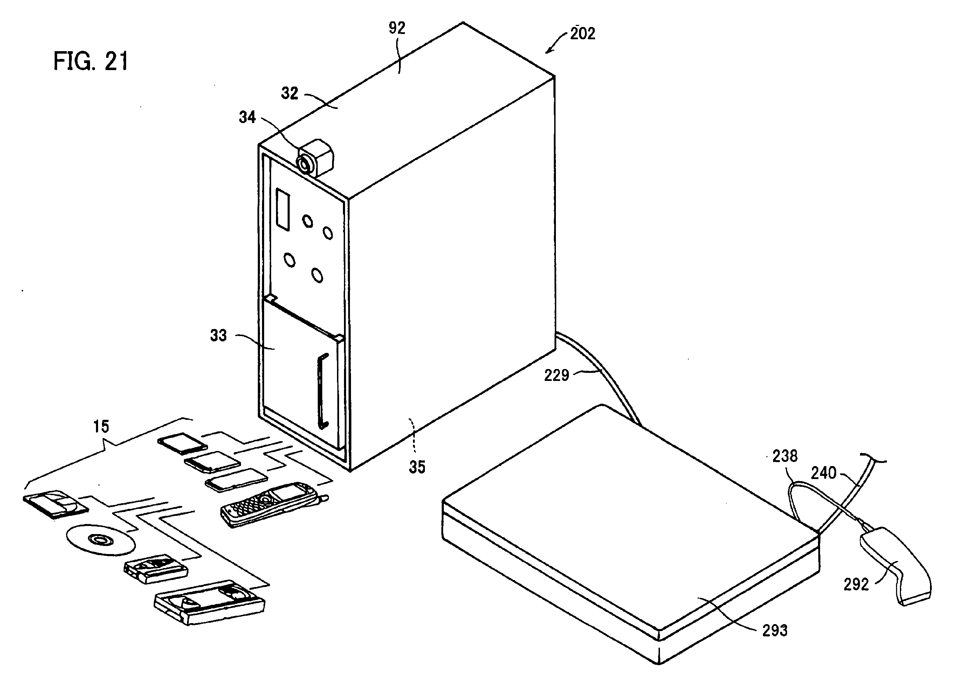

Fig. 21 is a perspective view of an electronic equipment destruction apparatus (a recording medium destruction apparatus) employed in the present embodiment.

Fig. 3, described above, corresponds to a partially broken perspective view showing the internal configuration of a main body device in the electronic equipment destruction apparatus shown in Fig. 21, and Fig. 4, described above, corresponds to a front view showing an example of a certificate of destruction printed by the electronic equipment supervising apparatus.

The electronic equipment destruction apparatus 202 includes a main body device 92, a control device 293, and a bar code reader 292, as shown in Fig. 21. The main body device 92 and the control device 293 are connected to each other by a signal cable 229. The bar code reader 292 is connected to the control device 293 by a signal line 238. The control device 293 serving as a component of the electronic equipment destruction apparatus 202 and an electronic equipment supervising apparatus 201 are connected to each other by a signal cable 240.

The main body device 92 is the same as that in the second embodiment, and includes a casing 32 surrounding the outer periphery. The casing 32 has a door 33 on its front face, and its interior is an operation chamber 35, as shown in Fig. 3.

A worker image pickup video camera 34 is mounted on the top of the casing 32.

The worker image pickup video camera 34 picks up an image of the outside of the casing 32, and is installed at such a position and at a mounting angle where an image of a person who has approached the door 33 can be picked up.

An electric motor 3, a speed reducer (not shown), a driver 4, a hard disk fixing stand 5, a guiding member 6, and so on within the casing 32 have already been described.

By rotation of the motor 3 in the forward direction or the backward direction, the driver 4 is moved back and forth in the vertical direction within the operation chamber 35, and a hard disk 15 is destroyed by being pierced with pins 7 provided on the driver 4.

An object-to-be-destroyed image pickup video camera 37 is installed, as shown in Fig. 3, in the operation chamber 35 within the casing 32. The video camera 37 has already been described.

The same control device 293 as the personal computer 93, already described, controls the worker image pickup video camera 34 and the object-to-be-destroyed image pickup video camera 37. Further, the control device 293 also functions as bibliographic information recording means. Bibliographic information has already been described.

Although "information for specifying a person who has requested to destroy a recording medium" means the name or the designation of an individual or a juridical person who has requested destruction, it is assumed that an owner himself or herself of electronic equipment destroys a recording medium in the present embodiment, so that "information for specifying a person who has requested to destroy a recording medium" has no significant meaning.

As described in the foregoing, the control device 293 controls the worker image pickup video camera 34 and the object-to-be-destroyed image pickup video camera 37, and videos respectively picked up by the video cameras 34 and 37 can be recorded on a memory within the control device 293.

Information read by the bar code reader 292 is also recorded on the memory within the control device 293.

Description is now made of the electronic equipment supervising apparatus 201. The electronic equipment supervising apparatus 201 employs a known personal computer, and is operated by a special program. That is, information for specifying electronic equipment, the outline of data possessed by the electronic equipment, and other bibliographic information are recorded on the personal computer composing the electronic equipment supervising apparatus 201, and a computer program that records discard of the equipment and destruction of the data is installed therein.

The information for specifying electronic equipment is information for specifying the personal computers 241 to 247 connected to the electronic equipment supervising apparatus 201 and information for respectively specifying recording media (hard disks in many cases) 284 to 290 within the personal computers 241 to 247.

A concrete example of the information for specifying each of the personal computers 241 to 247 includes the asset number and the nickname, the name of a person in charge, or the like. That is, although a LAN (Local Area Network) is constructed within a company today to connect a lot of personal computers to one another in many cases, the nickname or the name of the person in charge may be used in many cases in order to identify each of the personal computers at this time.

In the present embodiment, the personal computers 241 to 247 are each specified by the name of the person in charge. Specifically, the personal computers 241, 242, 243, 244, 245, 246, and the 247 are respectively identified by being named "HONGO", "ICHIMONJI", "KAZAMI", "YUKI", "JIN", "YAMAMOTO", and "JO".

Each of the personal computers 241 to 247 may be provided with an information recording member such as a bar code or an IC chip, and an information reading device such as a bar code reader (not shown) may read out the information recording member so as to record information on the electronic equipment supervising apparatus 201.

"Information for specifying each of recording media 284 to 290 within personal computers 241 to 247" specifically means the manufacturer or the manufacturing number of the recording medium, and is substantially the same item as "information for specifying a destroyed recording medium", described above.

Each of the recording media 284 to 290 may be provided with an information recording member such as a bar code or an IC chip, and a bar code reader (not shown) or the like may read out the information recording member, to record information on the electronic equipment supervising apparatus 201.

"The outline of data possessed by electronic equipment" means the outline of programs, information, and so on recorded on the recording media 284 to 290. For example, the designation of a program such as "word-processing software manufactured by A Company", "create table software manufactured by B Company", or "CAD software manufactured by C company", and the designation and the abstract of information such as "sales per month", "product list", or "cost sheet" are "the outline of data possessed by electronic equipment". A predetermined mark or sign may be also "the outline of data possessed by electronic equipment".

Examples of bibliographic information include an asset number, a date of purchase, and a purchase price. On the electronic equipment supervising apparatus 201 according to the present embodiment, a picture of a hard disk (a recording medium) of an electronic equipment and a picture of the appearance of the electronic equipment taken immediately after purchase of the equipment are also recorded.

Furthermore, on the electronic equipment supervising apparatus 201 according to the present embodiment, the bibliographic information recorded by the electronic equipment destruction apparatus 202, and the videos respectively picked up by the worker image pickup video camera 34 and the object-to-be-destroyed image pickup video camera 37 are recorded.

The bibliographic information recorded by the electronic equipment destruction apparatus 202 are listed again below:
(1) Information for specifying the place where a recording medium destruction apparatus is installed
(2) Information for specifying the time when a recording medium was destroyed
(3) Information for specifying a person who has operated a recording medium destruction apparatus
(4) Information for specifying a destroyed recording medium
(5) Information for specifying a recording medium destruction apparatus itself
(6) Information for specifying the reason for destroying a recording medium
(7) Information for specifying the original owner of a destroyed recording medium
(8) Information for specifying a person who has requested to destroy a recording medium

Description is now made of the function of the electronic equipment supervising apparatus 201 according to the present embodiment, followed by a method of using the same.

The electronic equipment supervising apparatus 201 according to the present embodiment is connected to each of the personal computers 241 to 247, so that outline of data possessed by each of the personal computers 241 to 247 (outline of data possessed by the electronic equipment) is directly inputted to the electronic equipment supervising apparatus 201. Further, the electronic equipment supervising apparatus 201 automatically and periodically accesses each of the personal computers 241 to 247, to update the outline of the data.

In the electronic equipment supervising apparatus 201, the outline of the data possessed in relation to each of the personal computers 241 to 247 is recorded. For example, the outline of the data is recorded such that the personal computer (HONGO) 241 possesses "word-processing software manufactured by A Company" and "sales per month", and the personal computer (ICHIMONJI) 242 possesses "CAD software manufactured by C Company", "product list", and "cost sheet".

In the present embodiment, when the data possessed by each of the personal computers 241 to 247 is copied on the other recording medium, each of the personal computers 241 to 247 accesses the electronic equipment supervising apparatus 201, to record a copying history on the electronic equipment supervising apparatus 201. Similarly, even when the data possessed by each of the personal computers 241 to 247 is overwritten, each of the personal computers 241 to 247 accesses the electronic equipment supervising apparatus 201, to record a copying history on the electronic equipment supervising apparatus 201.

Furthermore, in the electronic equipment supervising apparatus 201, a picture of each of the personal computers 241 to 247 and a picture of each of the recording media (hard disks) 284 to 290 are recorded. The pictures are taken immediately after the equipment has been purchased and are recorded on the electronic equipment supervising apparatus 201 by a known method.

Information for specifying each of the recording media 284 to 290, for example, a manufacturer, a manufacturing number, etc. of the recording medium are recorded on the electronic equipment supervising apparatus 201 by manual entry.

In a case where each of the personal computers 241 to 247 and the recording media (hard disks) 284 to 290 is provided with a bar code, an IC chip, or the like, recorded information may be read by a predetermined information reading device and recorded on the electronic equipment supervising apparatus 201.

The above-mentioned picture, manufacturing number, etc. are, of course, recorded in relation to each of the personal computers 241 to 247.

In a case where each of the personal computers 241 to 247 is employed, and any of the personal computers is discarded due to a fault or obsolescence, the data in each of the recording media 284 to 290 is destroyed in order to prevent leakage of the data, and the destroyed data is further recorded on the electronic equipment supervising apparatus 201.

In the present embodiment, the apparatus for destroying the recording media 284 to 290 (the electronic equipment destruction apparatus 202) is connected to the electronic equipment supervising apparatus 201, so that information indicating that each of the recording media 284 to 290 has been destroyed is directly inputted to the electronic equipment supervising apparatus 201.

The data in each of the recording media 284 to 290 is destroyed in accordance with the following procedure using the electronic equipment destruction apparatus 202.

That is, in a case where the personal computers 241 to 247 are discarded, the recording media (hard disks) 284 to 290 respectively contained therein are taken out.

If each of the personal computers 241 to 247 and the recording media (hard disks) 284 to 290 is assigned a bar code, the contents of write-down on the bar code are read out by the bar code reader 292.

The door 33 of the main body device 92 in the electronic equipment destruction apparatus 202 is opened, to mount any of the hard disks 284 to 290 to be destroyed in the operation chamber 35 inside thereof.

Thereafter, the door 33 is closed, and a predetermined work start switch is turned on.

In the present embodiment, there is a limit switch (not shown) on the door 33, and the driver 4 is not operated unless closure of the door is sensed.

When the work start switch is turned on, the motor is rotated in the forward direction, so that the driver 4 falls to deform the hard disk, and the pins 7 further penetrate a recording portion of the hard disk. Thereafter, the motor is rotated in the backward direction, so that the driver 4 rises to return to a stand-by position.

In the present embodiment, the worker image pickup video camera 34 and the object-to-be-destroyed image pickup video camera 37 are operated during a series of operations, described above.

That is, at the same time the work start switch is turned on, the worker image pickup video camera 34 starts image pickup, to record the work situations of a worker as a moving image. At this time, an image of not only the figure of the worker but also the surroundings of the place where the electronic equipment destruction apparatus 2 itself is installed are also picked up. Information related to the moving image is recorded once on the memory within the control device 103.

The object-to-be-destroyed image pickup video camera 37 picks up respective images of the hard disks 284 to 290. Therefore, the object-to-be-destroyed image pickup video camera 37 records respective videos before, at the moment of, and after destruction of each of the hard disks 284 to 290 as moving images.

As described in the foregoing, when the object-to-be-destroyed image pickup video camera 37 is installed at such a position and at a mounting angle where respective images of upper surfaces of the hard disks 284 to 290 to be destroyed can be picked up, respective images of the manufacturing numbers and others of the hard disks 284 to 290 can be picked up, so that information related to the moving images for respectively specifying the destroyed recording media are obtained. Information related to the moving images are recorded once on the memory within the control device 293.

After a series of operations is finished, the worker selects a clear image suited to be recorded out of videos picked up by the object-to-be-destroyed image pickup video camera 37 as "the overall picture of a destroyed hard disk" and "enlargement of a manufacturing number portion of a picture of a destroyed hard disk".

Similarly, the worker selects a clear image suited to be recorded out of videos picked up by the worker image pickup video camera 34 as "a picture of the face of a worker".

A working place, an apparatus used for destruction, the reason for destroying a hard disk, and so on are written down using a keyboard (not shown) of the control device 293. Further, the names (Hongo, etc.) of the personal computers 241 to 247 and the manufacturing numbers of the recording media (hard disks) 284 to 290 are recorded using the keyboard (not shown) of the control device 293. In the case that the personal computers 241 to 247, for example, are respectively assigned bar codes, and the manufacturing numbers and others can be respectively specified by the bar codes, the necessity of entry from the keyboard is eliminated.

The worker accesses the electronic equipment supervising apparatus 201 using the control device 293, and records "the overall picture of a destroyed hard disk", "enlargement of a manufacturing number portion of a picture of a destroyed hard disk", and "a picture of the face of a worker" are recorded as image information on a predetermined memory in the electronic equipment supervising apparatus 201.

Simultaneously, "a working place", "an apparatus used for destruction", and "the reason for destroying a hard disk" are recorded as character information on the predetermined memory in the electronic equipment supervising apparatus 201. Similarly, the information read out by the bar code reader 292 is recorded on the predetermined memory in the electronic equipment supervising apparatus 201.

Furthermore, a certificate of destruction is printed by the printer 218, as required. The certificate of destruction has a format as shown in Fig. 4, for example, and contains the date of destruction, the overall picture of a destroyed hard disk, enlargement of a manufacturing number portion of a picture of a destroyed hard disk, the name of a worker and a picture of the face thereof, a destruction place, an apparatus used for destruction, and the reason for destroying a hard disk.

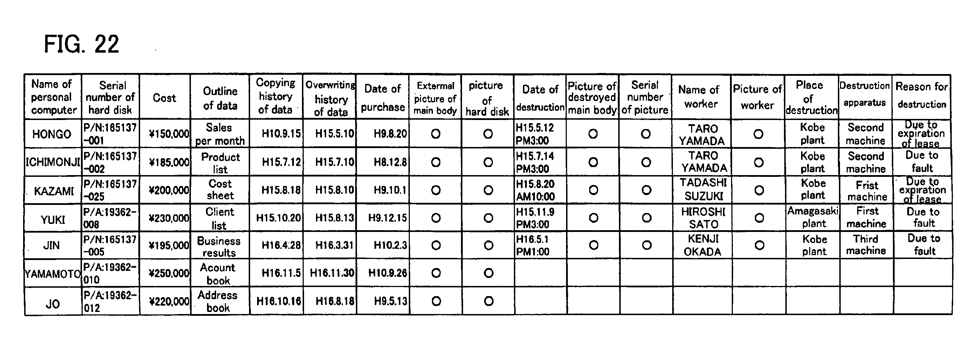

On the other hand, in the electronic equipment supervising apparatus 201, "the designation of each of the personal computers 241 to 247", "the manufacturing number or the like for specifying each of the recording media 284 to 290", "cost required for acquisition", "the outline of data", "a copying history of data", "an overwriting history of data", "pictures of the personal computers 241 to 247", "pictures of the recording media (hard disks) 284 to 290", "the date of destruction", "the overall picture of the destroyed hard disks 284 to 290", "enlargement of manufacturing number portions of pictures of the destroyed hard disks 284 to 290", "the name of a worker who has carried out destruction", "a picture of the face of a worker who has carried out destruction", "a working place of destruction", "an apparatus used for destruction", and "the reason for destroying a hard disk", described above, are recorded in relation to one another, and a table, as shown in Fig. 22, is displayed on a display (not shown), as required.

Fig. 22 is a management sheet displayed on a display of the electronic equipment supervising apparatus 201 shown in Fig. 20. In the table shown in Fig. 22, when there is image information, a round mark is assigned to a corresponding column. An image appears by a measure such as clicking the round mark.

According to the electronic equipment supervising apparatus 201 in the present embodiment, data can be managed in addition to asset management, so that leakage of data can be prevented.

Although in the above-mentioned embodiment, exemplified as the electronic equipment destruction apparatus 202 is one for mechanically destroying the recording medium, the electronic equipment destruction apparatus 202 may be one for electrically destroying a recording medium and one using a combination of electrical destruction and mechanical destruction.

A modified example of the electronic equipment destruction apparatus 202 will be described.

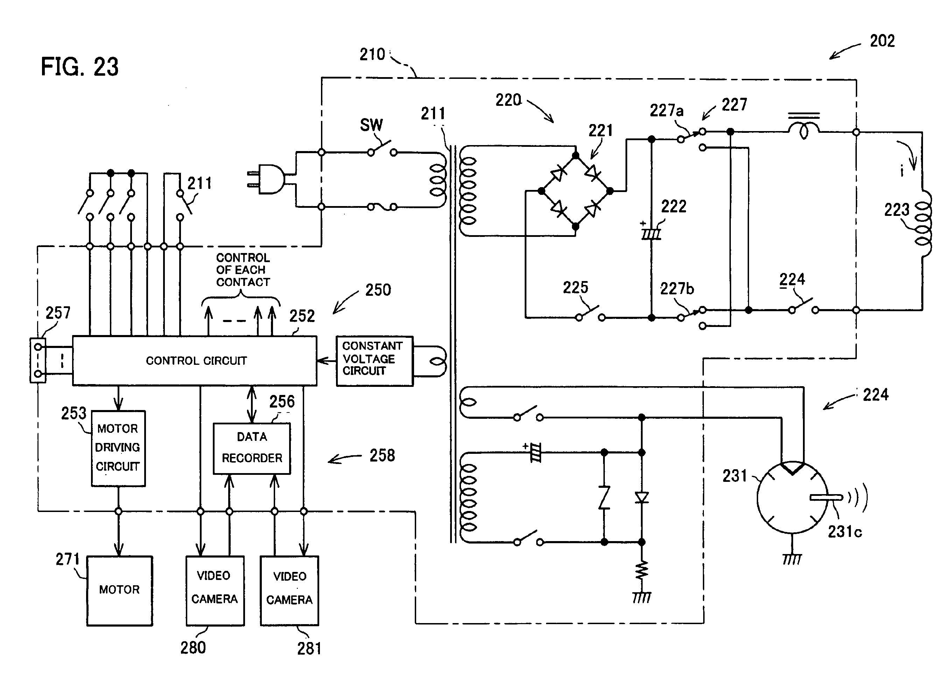

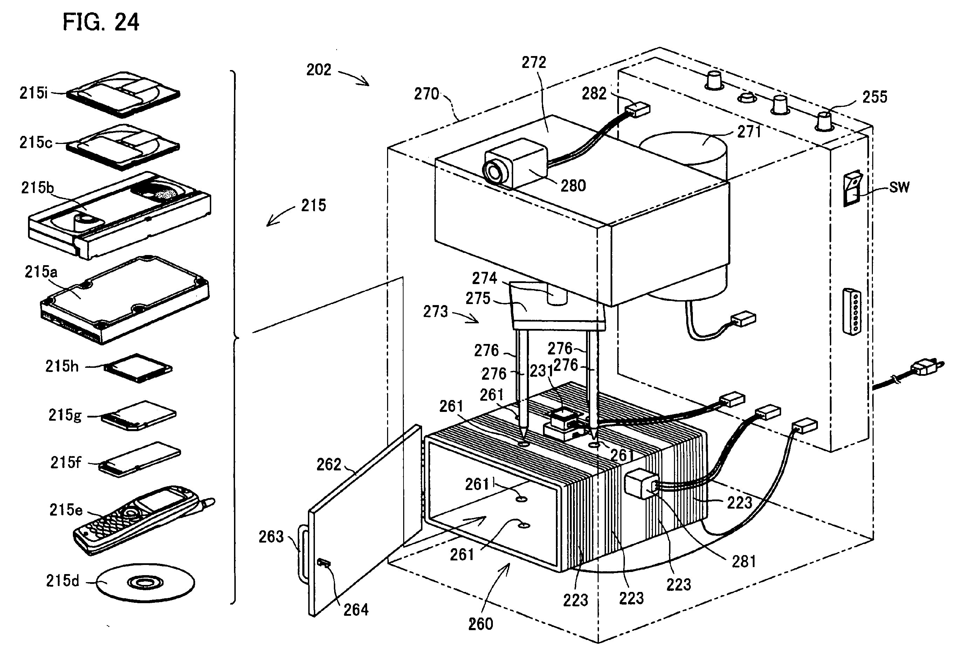

Fig. 23 is a fundamental circuit diagram of an electronic equipment destruction apparatus (a recording medium destruction apparatus) 202 according to a still further embodiment of the present invention, and Fig. 24 is a perspective view showing the internal configuration of the electronic equipment destruction apparatus 202 shown in Fig. 23.

The electronic equipment destruction apparatus 202 according to the present embodiment includes a magnetic field generator 220, an electromagnetic wave generator 230, a controller 250, image pickup means 258, and a power supply transformer 211 for supplying power to each of the units.

The magnetic field generator 220 has the function of generating an attenuating alternating magnetic field by discharging charges with which a capacitor 222 is charged through an exciting coil 223. The magnetic field generator 220 is a circuit including the function of generating an attenuating alternating magnetic field whose magnetic flux density is gradually lowered with an elapse of time, not generating an intense magnetic field for a long time.

The electromagnetic wave generator 230 is mainly composed of a magnetron 231, and radiates an electromagnetic wave having a predetermined intensity from an antenna 231c. In the present embodiment, the magnetron 231 having an oscillation frequency of approximately 4.3 GHz is used, and the electromagnetic wave radiated from the antenna 231c is a microwave having a frequency of approximately 4.3 GHz (whose wavelength is approximately 7 cm).

The image pickup means 258 is composed of a data recorder 256 and two video cameras 280 and 281. Here, the video camera 280 functions as a worker image pickup video camera, and the video camera 281 functions as an object-to-be-destroyed image pickup video camera.

The data recorder 256 is formed of a data storage such as a hard disk drive or a semiconductor memory, to record video data (image information) outputted from the video cameras 280 and 281 by an instruction from a control circuit 252.

A video output connector 257 is connected to the control circuit 252, and a reproduction device such as a personal computer (PC) is connected to the connector 257, so that it is possible to transmit the video data recorded on the data recorder 256 to the PC and reproduce the transmitted video data.

Description is now made of the configuration of the electronic equipment destruction apparatus 202 according to the present embodiment.

The electronic equipment description apparatus 202 is so configured that an receptacle 260, an electric motor 271, a driver 272, a destruction unit 273, the object-to-be-destroyed image pickup video camera 281, and a circuit block 210 are contained in a box-shaped main body casing 270, and the worker image pickup video camera 280 is provided outside the main body casing 270, as shown in Fig. 24.

A door 262 for covering an opening on a front face of the receptacle 260 has a hook 264 projecting toward a rear face of the receptacle 260 provided in the vicinity of its handle 263. The main body casing 270 corresponding to the hook 264 is provided with an engagement hole (not shown).

The engagement hole (not shown) is provided with a detection sensor (not shown), and a detection signal of the detection sensor is utilized as a control signal for starting image pickup by the video cameras 280 and 281.

An exciting coil 223 is wound around an outer surface at the top and bottom, the right and left, and the rear of the receptacle 260.

The driver 272 is of a structure including a motion converting function for linearly moving the destruction unit 273 in the vertical direction upon receipt of a rotation driving force of the motor 271.

The magnetron 231 is fixed to the center on an upper face of the receptacle 260, and the antenna 231c (see Fig. 23) projects toward an inner space of the receptacle 260.

The destruction unit 273 includes a driving shaft 274, a supporting plate 275, and destroying pins 276. The driving shaft 274 is a shaft linearly moved by the driver 272, and the supporting plate 275 in a square flat plate shape is fixed to a lower end of the driving shaft 274. The four pins 276 whose round bars are sharpened at their lower ends are respectively fixed downward to four corners of the supporting plate 275.

That is, the electronic equipment destruction apparatus 202 according to the present embodiment lowers the destruction unit 273 by the rotation driving force of the motor 271 so that the four pins 276 penetrate the receptacle 260 in the vertical direction.

The worker image pickup video camera 280 is fixed, facing forward, to the center on the upper face of the main body casing 270, and a connector 282 of the video camera 280 is connected to the circuit block 210. The worker image pickup video camera 280 has the function of starting image pickup by an instruction signal from the control circuit 252 (see Fig. 23), picking up respective images of an operator of the electronic equipment destruction apparatus 202 and situations where the operator mounts a recording medium, and transmitting the images to the data recorder 256 (see Fig. 23).

The object-to-be-destroyed image pickup video camera 281 is fixed, facing inward, to an upper part on a right side face of the receptacle 260. The object-to-be-destroyed image pickup video camera 281 has the function of starting image pickup by an instruction from the control circuit 252, picking up respective images of inherent information such as the model number, the serial number, and so on of a recording medium accommodated in the receptacle 260 and situations where the recording medium is destroyed, and transmitting the images to the data recorder 256.

The electronic equipment destruction apparatus 202 according to the present embodiment can destroy a recording medium (a magnetic recording medium) 215 such as a hard disk 215a, a VHS video tape 215b, or a flexible disk 215c, as shown in Fig. 24. In the following description, however, a case where the hard disk 215a is discarded will be described by way of example.

When an operator sets a power switch SW to ON, and the door 262 is opened, the hook 264 is detached from an engagement hole (not shown) so that a detection sensor detects that the door is opened. When the detection sensor detects that the door is opened, a detection signal is transmitted to the control circuit 252. The control circuit 252 sends out a control signal to the video cameras 280 and 281, to start image pickup.

At this time, the control circuit 252 records, prior to starting to record an image picked up, a date at that time on the data recorder 256.

The operator opens the door 262 to accommodate in the receptacle 260 the hard disk 215a that will be subjected to destruction, and closes the door 262 to push an operation switch 255.

When the operation switch 255 is operated, the control circuit 252 controls a charging contact 225, an excitation contact 224 for exciting the coil 223, and a pair of contacts 227a and 227b in a polarity inverter 227, all in the magnetic field generator 220.

That is, in Fig. 23, the control circuit 252 switches both of the contacts 227a and 227b in the polarity inverter 227 to either one of them and connects the contact, and closes the charging contact 225 only for a predetermined time period. Consequently, the capacitor 222 is charged up to a crest value of a voltage full-wave rectified by a bridge diode 221. When the predetermined time period has elapsed from the time when the charging contact 225 is closed, the control circuit 252 opens the charging contact 225, and then closes the excitation contact 224. Consequently, charges with which the capacitor 222 is charged are discharged through the exciting coil 223, and an attenuating alternating current is caused to energize the exciting coil 223, to generate an attenuating alternating magnetic field.

Consequently, the attenuating alternating magnetic field is applied to the hard disk 215a accommodated in the receptacle 260, so that recorded magnetic data is erased.

When a predetermined time period has elapsed from the time when the excitation contact 224 is closed, the control circuit 252 opens the excitation contact 224 to finish the process of erasure of magnetic data and then, enter the process of destruction.

When the control circuit 252 enters the process of destruction, the destruction unit 273 falls so that the four pins 276 penetrate four openings 261 on the upper face of the receptacle 260, and further penetrate the hard disk 215a accommodated in the receptacle 260. Lower ends of the pins 276 that have penetrated the hard disk 215a respectively reach openings 261 on the lower face of the receptacle 260.

The motor 271 is then driven to rotate in the backward direction, to raise the destruction unit 273. Consequently, the pins 276 that have penetrated the hard disk 215a rise, to separate from the hard disk 215a. The control circuit 252 stops the transmission of a control signal to the motor driving circuit 253, when a position sensor (not shown) detects a rise of the destruction unit 273 to a predetermined position.

Thereafter, when the operator opens the door 262, the detection signal of the detection sensor is transmitted to the control circuit 252 so that the image pickup by the video cameras 280 and 281 is stopped, whereby a series of destruction processes is completed.

When the series of operations is thus completed, magnetic data is erased from the hard disk 215a accommodated in the receptacle 260; besides, the hard disk 215a is physically destroyed upon being pierced with the pins 276.

That is, when the hard disk 215a is subjected to the destruction by the electronic equipment destruction apparatus 202 according to the present embodiment, the magnetic data is erased; besides, the hard disk 215a enters a physically destroyed state upon being perforated.

Although description was made of a case where the magnetic recording medium is destroyed, the electronic equipment destruction apparatus 202 according to the present embodiment can also destroy an optical recording medium, a memory, and so on. That is, the electronic equipment destruction apparatus 202 includes the electromagnetic wave generator 230, so that it can also destroy recorded data and a wiring pattern of a memory integrated circuit by applying an electromagnetic wave generated by generating a microwave using the electromagnetic wave generator 230 to a recording medium such as an optical recording medium or a memory.

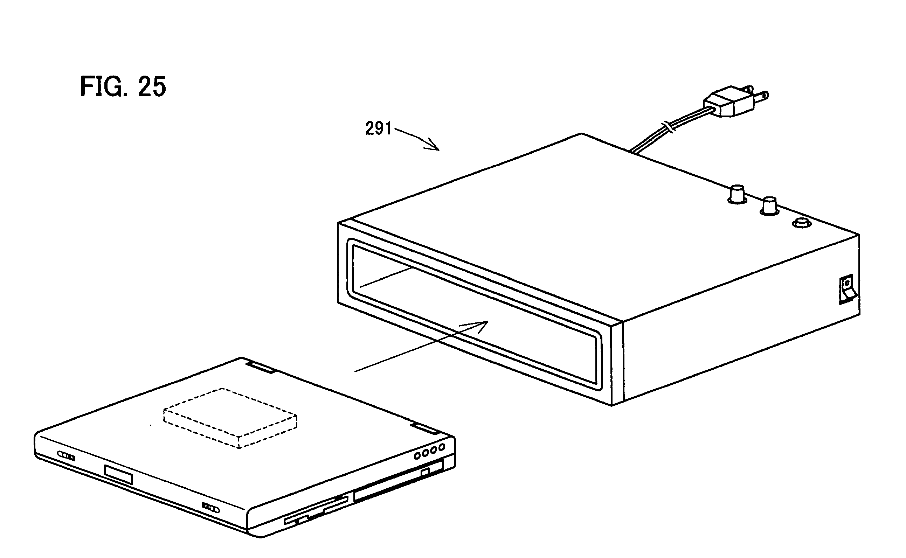

Although in the foregoing embodiment, description was made of a measure to take out the recording medium from the personal computer and destroy the recording medium taken out, an electronic equipment destruction apparatus 291 as shown in Fig. 25 can also insert a personal computer itself into the receptacle and generate a more intense attenuating alternating magnetic field to destroy recorded data in a recording medium inside thereof.

That is, Fig. 25 is a perspective view showing a modified example of the electronic equipment destruction apparatus.

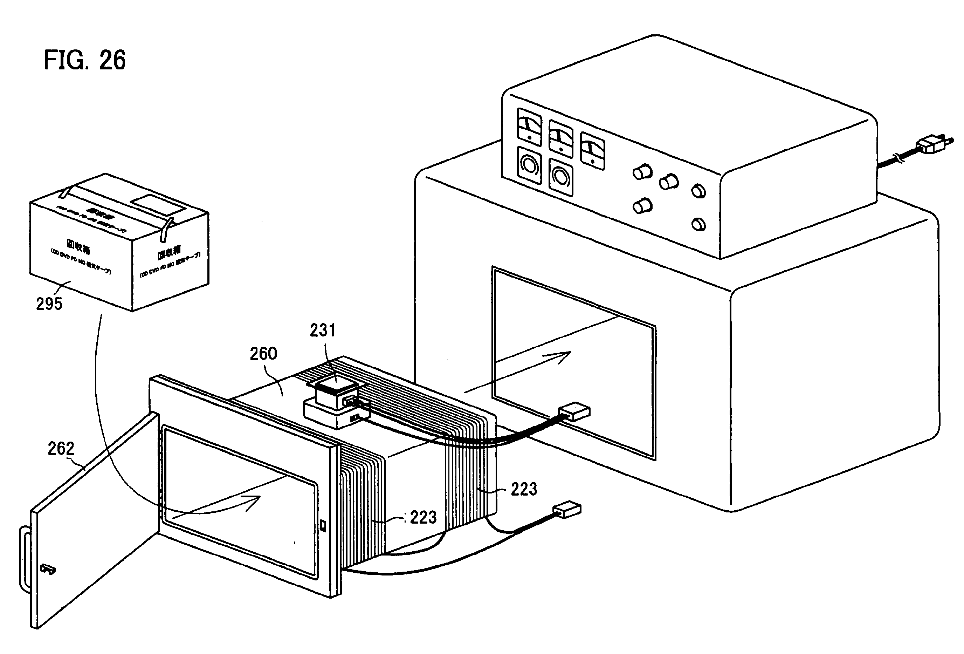

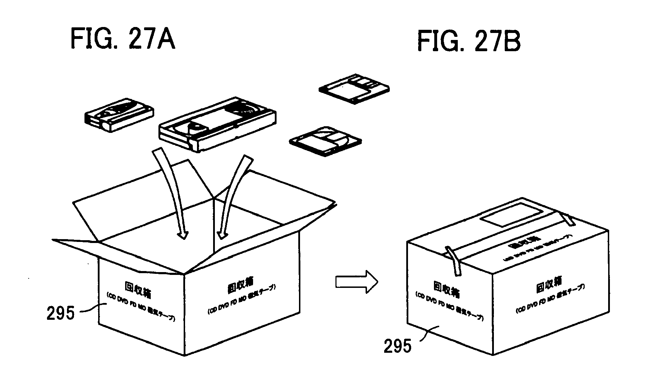

Furthermore, a lot of hard disk drives, flexible disks, etc. may be accommodated in a box (a recording medium disposal box) 295, and the box may be inserted into an receptacle 260 in a data erasure device, as shown in Figs. 26 and 27. In this case, a picture or the like, which is to be erased, of the hard disk drive may be individually taken and inputted to the electronic equipment supervising apparatus 201.

That is, Fig. 26 is a perspective view showing a modified example of a measure to destroy electronic equipments, and Fig. 27 is an explanatory view showing one step of the measure shown in Fig. 26.

It is desirable that the place where copied data exists and the presence or absence of destruction are recorded on the electronic equipment supervising apparatus 201, although this must rely on manual entry.

As another embodiment of the present invention, the electronic equipment destruction apparatus in Figs. 23 to 27 may be independently used as an electronic equipment destruction apparatus or a recording medium destruction apparatus without using the electronic equipment supervising apparatus 201.

## Claims

1. A recording medium destruction apparatus for destroying a recording medium so that information recorded on the recording medium is irreproducible, including image information recording means, the image information recording means recording at least one of the following information:
(1) Information related to a still image or a moving image at the time of destroying the recording medium
(2) Information related to a still image or a moving image of the recording medium that has been destroyed
(3) Information related to a still image or a moving image obtained by picking up an image of a person who has operated the recording medium destruction apparatus
(4) Information related to a still image or a moving image obtained by picking up an image of the surroundings of the place where the recording medium destruction apparatus itself is installed
(5) Information related to a still image or a moving image for specifying the destroyed recording medium
(6) Information related to a still image or a moving image for specifying the recording medium destruction apparatus itself.

2. The recording medium destruction apparatus according to claim 1, wherein the image information recording means has image pickup means for picking up at least one of the following images:
(1) A still image or a moving image at the time of destroying the recording medium
(2) A still image or a moving image of the recording medium that has been destroyed
(3) A still image or a moving image obtained by picking up an image of a person who has operated the recording medium destruction apparatus
(4) A still image or a moving image obtained by picking up an image of the surroundings of the place where the recording medium destruction apparatus itself is installed
(5) A still image or a moving image for specifying the destroyed recording medium
(6) A still image or a moving image for specifying the recording medium destruction apparatus itself.

3. The recording medium destruction apparatus according to claim 1, comprising bibliographic information recording means for recording at least one of the following bibliographic information:
(1) Information for specifying the place where the recording medium destruction apparatus is installed
(2) Information for specifying the time when the recording medium was destroyed
(3) Information for specifying a person who has operated the recording medium destruction apparatus
(4) Information for specifying the destroyed recording medium
(5) Information for specifying the recording medium destruction apparatus itself
(6) Information for specifying the reason for destroying the recording medium
(7) Information for specifying the original owner of the destroyed recording medium
(8) Information for specifying a person who has requested to destroy the recording medium.

4. The recording medium destruction apparatus according to claim 1, wherein the recording medium destruction apparatus is adapted to apply a mechanical force to the recording medium so as to destroy the recording medium.

5. The recording medium destruction apparatus according to claim 1, wherein the recording medium destruction apparatus is adapted to apply at least one of an electromagnetic wave, a magnetic field, and heat to the recording medium so as to destroy the recording medium.

6. The recording medium destruction apparatus according to claim 1, comprising code number assignment means for assigning a code number to the recording medium to be destroyed, and recording medium for recording, when the recording medium is destroyed, the code number assigned to the destroyed recording medium and the date on which the recording medium has been destroyed.

7. The recording medium destruction apparatus according to claim 1,
wherein the recording medium destruction apparatus is adapted to cut and destroy the recording medium with a rotary cutting edge, and
wherein the recording medium destruction apparatus further comprises image information recording medium for recording the recording medium as the still image or the moving image from the time of insertion of the recording medium to the time of falling of the recording medium into the rotary cutting edge arranged opposite thereto so as to be cut therewith.

8. The recording medium destruction apparatus according to claim 1, wherein the recording medium belonging to any one of a plurality of thickness categories set depending on the thickness of the recording medium or the recording media belonging to two or more of the thickness categories can be cut.

9. A recording medium destruction apparatus for driving a pin so as to destroy a recording medium so that information recorded on the recording medium is irreproducible, the recording medium destruction apparatus comprising monitoring means for monitoring situations where the recording medium is destroyed.

10. The recording medium destruction apparatus according to claim 1, comprising an electric coil for generating a magnetic field having a predetermined intensity, a pin for physically destroying the recording medium, and a receptacle for accommodating the recording medium,
the coil being wound around an outer surface of the receptacle so that the magnetic field is induced within the receptacle, the pin being mounted on the outside of the receptacle so as to be movable nearer to and apart from the receptacle and to be adapted to pierce and destroy the recording medium accommodated within the receptacle through an opening formed toward the receptacle, and
further comprising image pickup means for picking up an image of the process of operation on the recording medium, including at least inherent information for specifying the recording medium.

11. A recording medium destruction system comprising the recording medium destruction apparatus according to claim 1, and a control device connected to the recording medium destruction apparatus, for transmitting image data recorded on the image information recording medium toward the control device depending on the operation of the control device to perform at least either one of displaying and printing.

12. A recording medium destruction system comprising a plurality of the recording medium destruction apparatuses according to claim 1, and a control device connected to the recording medium destruction apparatuses, for sequentially transmitting the image data recorded on the image information recording means toward the control device, to allow the image data to be collectively managed therein.

13. An electronic equipment supervising apparatus adapted to record information for specifying an electronic equipment and an outline of data possessed by the electronic equipment, and to record discard of the equipment and destruction of the data by image information.

14. The electronic equipment supervising apparatus according to claim 13, wherein the electronic equipment is connected to the electronic equipment supervising apparatus.

15. The electronic equipment supervising apparatus according to claim 13, wherein the electronic equipment supervising apparatus is adapted to record a copying history and/or an overwriting history of the data possessed by the electronic equipment.

16. The electronic equipment supervising apparatus according to claim 13, adapted to record destruction of copied data.

17. The electronic equipment supervising apparatus according to claim 13, adapted to record respective videos before and after the destruction of the electronic equipment or the recording medium.

18. The electronic equipment supervising apparatus according to claim 13, comprising a destruction apparatus for the electronic equipment or the recording medium, the destruction apparatus being connected to the electronic equipment supervising apparatus.

19. The electronic equipment supervising apparatus according to claim 13, comprising a destruction apparatus for the electronic equipment or the recording medium, the destruction apparatus being adapted to pick up an image of the electronic equipment or the recording medium at the time of or after the destruction.

20. The electronic equipment supervising apparatus according to claim 13, wherein the electronic equipment supervising apparatus or a destruction apparatus is connected to an information reading device so that information for specifying the electronic equipment is obtained by information read from the information reading device.

21. A computer program for recording:
information for specifying electronic equipment;
outline of data possessed by the electronic equipment;
discard of the equipment; and
destruction of the data.
